(19) Europäisches Patentamt / European Patent Office / Office européen des brevets

(11) **EP 3 349 446 A1**

(12) **DEMANDE DE BREVET EUROPEEN**

(43) Date de publication:
**18.07.2018 Bulletin 2018/29**

(21) Numéro de dépôt: **17186782.3**

(22) Date de dépôt: **18.08.2017**

(51) Int Cl.:
*H04N 19/103* (2014.01)　　*H04N 19/15* (2014.01)
*H04N 19/182* (2014.01)　　*H04N 19/176* (2014.01)
*H04N 19/593* (2014.01)

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**MA MD**

(30) Priorité: **17.01.2017 FR 1750340**

(71) Demandeur: **STMicroelectronics (Grenoble 2) SAS**
**38000 Grenoble (FR)**

(72) Inventeurs:
• **BONA, Mariano**
**38100 GRENOBLE (FR)**
• **LEBOWSKY, Fritz**
**38410 SAINT MARTIN D'URIAGE (FR)**

(74) Mandataire: **Casalonga**
**Casalonga & Partners**
**Bayerstraße 71/73**
**80335 München (DE)**

(54) **PROCÉDÉ ET DISPOSITIF D'ENCODAGE DYNAMIQUE CONTRÔLÉ D'UN SIGNAL NUMÉRIQUE MULTIDIMENSIONNEL, EN PARTICULIER UN SIGNAL D'IMAGE ET PROCÉDÉ ET DISPOSITIF CORRESPONDANT DE DÉCODAGE**

(57) Procédé d'encodage d'un signal numérique initial (SIM) en un signal encodé (SIC), le signal numérique initial (SIM) comportant une séquence d'échantillons représentant un espace multidimensionnel, chaque échantillon étant affecté d'au moins une grandeur physique, le procédé comprenant pour certains au moins des échantillons courants des encodages localisés (20) du signal en des signaux numériques locaux encodés (SICL), le signal encodé (SIC) comportant lesdits signaux numériques locaux encodés (SICL), une analyse à la volée (21) d'une caractéristique associée au signal encodé, et un ajustement direct ou indirect (22) au niveau échantillon, d'au moins un paramètre d'encodage intervenant dans lesdits encodages localisés de façon à stabiliser la valeur de ladite caractéristique sur une valeur cible (TG) à une tolérance près.

_FIG.2_

EP 3 349 446 A1

**Description**

Des modes de mise en oeuvre et de réalisation de l'invention concernent l'encodage, notamment la compression, de données numériques, par exemple l'encodage d'un signal numérique représentant un espace multidimensionnel, tel qu'un signal d'image, et plus particulièrement le contrôle dynamique de la qualité de cet encodage de façon à par exemple stabiliser une caractéristique associée au signal encodé, tel que le taux de compression, sur une valeur cible, par exemple un taux de compression cible.

D'autres signaux multidimensionnels peuvent être envisagés comme par exemple des signaux audio multicanaux.

Généralement, dans le contexte de traitement d'image, une trame d'image à afficher sur un écran, par exemple un écran de téléviseur, est représentée par une structure matricielle d'information numérique représentant une grille de pixels et, à chaque pixel sont affectées plusieurs composantes couleur, par exemple les composantes de luminosité Y et de chrominance Cr et Cb possédant chacune un niveau ou amplitude pour le pixel considéré. Une telle structure de pixels ou « bitmap », correspond donc bit pour bit ou pixel par pixel, à l'image (on parle alors d'image « raster ») qui doit être affichée sur l'écran. Et, généralement, la structure de pixels est généralement dans le même format que celui utilisé pour le stockage dans la mémoire vidéo de l'écran. Et, la trame raster ainsi stockée dans la mémoire vidéo sera lue pixel par pixel sur une ligne et ligne par ligne. On parle alors de « raster scan ».

Actuellement, la taille des trames utilisées pour la télévision numérique haute définition, dite HDTV, est une taille dite « 2k1k » c'est-à-dire comportant 1080 lignes de 1920 pixels. Par ailleurs, la fréquence, c'est-à-dire le nombre de trames par seconde, est de 60 Hz.

Pour transmettre un tel signal d'image délivré par le décodeur TV, sur la liaison filaire reliant ce décodeur au téléviseur, il est nécessaire d'effectuer une compression du signal d'image délivré par le décodeur. En effet, transmettre un tel signal d'image sans compression requiert des vitesses de transfert extrêmement élevées qui sont généralement coûteuses et créent des interférences électromagnétiques.

C'est la raison pour laquelle on effectue une compression du signal délivré par le décodeur.

Des traitements de compression/décompression peuvent également être nécessaires pour le stockage des images dans une mémoire interne ou externe au décodeur.

En effet, un signal vidéo est généralement reçu dans un format encodé, par exemple selon les normes H264 ou HEVC, puis est décodé dans un format d'image du type RGB ou $YC_bC_r$ plus volumineux en espace mémoire.

Or, divers traitements sont usuellement appliqués aux images décodées. Et, entre chaque traitement, les images sont stockées, par exemple dans des mémoires tampon, dans le format décodé. Afin de limiter la capacité des mémoires utilisées, il est avantageux de réaliser une compression des images décodées avant stockage dans la mémoire puis une décompression lors de la lecture dans la mémoire avant traitement.

De telles compressions/décompressions ne doivent pas introduire de dégradation des images.

Actuellement, une compression classique d'un signal vidéo peut être effectuée en appliquant un filtre passebas bidimensionnel sur les composantes de chrominance du signal d'image. Cependant, même si la qualité de l'image finalement affichée sur l'écran reste acceptable, des informations haute fréquence du signal d'image peuvent être perdues.

Il a été proposé dans la demande de brevet français déposée au nom de la Demanderesse sous le numéro 1650814, un procédé et un dispositif d'encodage/décodage d'un signal multidimensionnel, conduisant avantageusement à une compression/décompression du signal multidimensionnel, permettant de préserver les performances spectrales dans toute la bande de fréquence du signal (absence de filtre linéaire) tout en n'étant pas significativement impactés par un bruit blanc gaussien.

Dans le domaine vidéo, ce procédé et ce dispositif d'encodage/décodage, se traduit avantageusement par compression/décompression, permettant de réduire les dégradations visibles de l'image affichée, et permet d'augmenter significativement le taux de compression pour atteindre au minimum par exemple un taux de compression de 3X.

Ce procédé d'encodage de l'art antérieur repose sur un encodage localisé utilisant une séparation de l'information véhiculée par le signal, par exemple l'information couleur de d'image, en une paire de composants à savoir une amplitude de gradient et une structure (repère local). La paire amplitude de gradient/structure est calculée échantillon par échantillon (par exemple pixel par pixel) en recherchant la paire ayant l'erreur minimale dans une zone de d'échantillons candidats disponible, par exemple une zone localisée dans le voisinage de l'échantillon courant.

Selon un mode de mise en oeuvre et de réalisation, il est proposé ici un procédé et un dispositif d'encodage permettant de contrôler dynamiquement la qualité de cet encodage de façon à par exemple stabiliser une caractéristique associée au signal encodé, tel que le taux de compression, sur une valeur cible.

Selon un aspect, il est proposé un procédé d'encodage d'un signal numérique initial, par exemple un signal d'image, en un signal encodé. Le signal numérique initial comporte une séquence d'échantillons, par exemple des pixels, représentant un espace multidimensionnel, par exemple une image.

Chaque échantillon est affecté d'au moins une grandeur physique. Dans le cas d'un signal d'image, chaque pixel est affecté par exemple de composantes couleurs qui forment lesdites grandeurs physiques.

Dans le cas d'un signal audio multicanaux, les grandeurs physiques de chaque échantillon audio peuvent être les niveaux sonores de chacun desdits canaux.

Dans le cas d'une application vidéo, la séquence de pixels peut être une trame complète de l'image ou bien un macrobloc, par exemple de 64x64 pixels, de l'image, les macroblocs arrivant alors séquentiellement. La séquence de pixels peut également s'entendre comme étant une succession des pixels de la trame de l'image, ces pixels arrivant séquentiellement et ligne par ligne, conformément au format « raster ».

Le procédé comprend, pour certains au moins des échantillons courants, des encodages localisés du signal en des signaux numériques locaux encodés.

Le signal encodé comporte lesdits signaux numériques locaux encodés.

Le procédé comporte par ailleurs une analyse à la volée d'une caractéristique associée au signal encodé, par exemple le taux de compression du signal, et un ajustement direct ou indirect au niveau échantillon, d'au moins un paramètre d'encodage intervenant dans lesdits encodages localisés de façon à stabiliser la valeur de ladite caractéristique sur une valeur cible, par exemple un taux de compression cible, à une tolérance près.

Bien entendu, la valeur de la tolérance peut être plus ou moins faible et est choisie en fonction de l'application envisagée et de la caractéristique que l'on vise à stabiliser.

Le taux de compression n'est qu'un exemple non limitatif d'une caractéristique dont on souhaite stabiliser la valeur sur une valeur cible. On pourrait également envisager de stabiliser d'autres caractéristiques, comme par exemple la stabilisation du niveau de bruit qui représente un défi important pour la plupart des signaux relatifs à un espace multidimensionnel, comme par exemple un signal d'image ou encore un signal audio multicanaux ou encore un signal comportant des données relatives à une carte météorologique.

Ainsi, la combinaison d'encodages localisés, c'est-à-dire effectués au niveau « échantillon » (pixel par exemple) avec une analyse à la volée d'une caractéristique du signal encodé permet d'effectuer un ajustement au niveau « échantillon » de façon à stabiliser au mieux ladite caractéristique sur sa valeur cible, et ce sans nécessiter une puissance de calcul importante, car de simples équations locales (au niveau échantillon) suffisent.

Il devient alors possible d'atteindre des taux de compression d'images pouvant aller jusqu'à 4,5X avec des formats 3 x 8 bits RGB, voire 5X avec des signaux vidéo de 10 bits.

Comme on le verra plus en détails ci-après, dans certains cas le paramètre d'encodage peut être un bit dont la valeur peut être ajustée ou forcée indirectement par l'intermédiaire d'un paramètre intermédiaire tel qu'un seuil, par exemple un seuil dans une matrice de densité, dont la valeur est, elle, directement ajustée en fonction du résultat de l'analyse à la volée.

Dans d'autres cas, le paramètre d'encodage peut être un autre seuil, servant par exemple à être comparé à un gradient, qui sera, lui, directement ajusté en fonction du résultat de ladite analyse à la volée.

Bien que ladite analyse à la volée puisse être effectuée pixel par pixel, elle peut être en pratique, selon un mode de mise en oeuvre, effectuée bloc par bloc. En d'autres termes, l'analyse à la volée peut comprendre une détermination de la valeur de ladite caractéristique sur un bloc courant d'échantillons de ladite séquence et ledit ajustement est alors effectué pour chaque échantillon du bloc suivant d'échantillons.

Selon un premier mode de mise en oeuvre possible, on peut appliquer un masque du type bruit bleu à la séquence échantillon.

En pratique, ce masque du type bruit bleu peut être une matrice de « tremblement » (dither, en langue anglaise) de seuil qui offre ainsi une solution simple pour contrôler la densité dans un contexte multidimensionnel en utilisant un seul paramètre de densité (le seuil) qui est proportionnel à la densité globale désirée de toute quantité visée.

On peut alors ajuster un premier paramètre d'encodage et cet ajustement comprend pour chaque échantillon courant une comparaison de la valeur du masque associé à cet échantillon avec un premier seuil dont la valeur est ajustée en fonction de la valeur de ladite caractéristique par rapport à ladite valeur cible.

Le résultat de la comparaison conditionne la valeur de ce premier paramètre d'encodage.

Le masque peut être simplement une matrice statique (c'est-à-dire dont le contenu est décorrélé du contenu de l'espace multidimensionnel, par exemple de l'image) et comportant plusieurs valeurs prises parmi un jeu de valeurs de référence.

Et, lorsque la position de l'échantillon correspond à une des valeurs de la matrice, on applique une première valeur au premier seuil.

A titre d'exemple, lorsque la caractéristique est le taux de compression du signal encodé, la valeur du premier paramètre d'encodage définit la taille du signal numérique local encodé.

Et, ce premier paramètre d'encodage peut être un bit de référence qui est forcé à une première valeur logique lorsque la valeur du masque associé à l'échantillon courant est inférieure ou égale au premier seuil. Dans ce cas on peut forcer l'encodage à ne pas effectuer de compression locale du signal. Dans le cas où la caractéristique est le taux de compression, ceci permet de préserver une meilleure qualité de l'image.

Il serait toutefois possible de forcer le bit de référence à une première valeur logique lorsque la valeur du masque associé à l'échantillon courant est supérieure au premier seuil, ce qui favoriserait la stabilité sur un fort taux de compression par exemple mais en acceptant d'avoir une qualité d'image globalement plus dégradée.

Ainsi dans ce mode de mise en oeuvre, c'est la valeur du premier seuil qui est directement ajustée (par exemple augmentée ou diminuée) en fonction du résultat de ladite analyse à la volée et c'est le bit de référence (qui est un premier paramètre d'encodage) qui est de ce fait indirectement ajusté par l'intermédiaire du premier seuil.

Et, on verra plus en détail ci-après que lorsque la valeur du masque associé à l'échantillon courant est supérieure au premier seuil, la valeur de ce bit de référence peut dépendre alors d'une comparaison entre une valeur de gradient de ladite grandeur physique et un deuxième seuil.

Ce deuxième seuil peut être également un deuxième paramètre d'encodage dont la valeur va pouvoir être directement ajustée en fonction du résultat de ladite analyse à la volée.

Le procédé selon cet aspect est avantageusement mais non limitativement compatible avec le procédé d'encodage décrit dans la demande de brevet français précédemment mentionnée.

A cet égard, les encodages localisés peuvent être avantageusement effectués dans des repères locaux incluant chacun l'échantillon courant considéré et deux échantillons de référence choisis, sur la base d'un gradient minimal de ladite au moins une grandeur physique, parmi les échantillons disponibles de ladite séquence.

Les échantillons disponibles de la séquence peuvent être tout ou partie des échantillons déjà reçus, par exemple des échantillons étant déjà arrivés si l'on considère un format « raster » ou bien des échantillons du macrobloc arrivé et comportant ledit échantillon courant. Par ailleurs ces échantillons disponibles peuvent ou non avoir déjà subi un encodage localisé. Ces échantillons disponibles peuvent être des échantillons voisins ou non de l'échantillon courant ou bien des échantillons plus éloignés de cet échantillon.

Le choix de la taille de la zone contenant les échantillons disponible résulte notamment d'un compromis entre la complexité de traitement et la précision souhaitée pour le signal encodé.

Le gradient d'une grandeur physique affectée à un échantillon courant s'entend par exemple comme la variation du niveau de cette grandeur physique vue au niveau de cet échantillon courant, c'est-à-dire comme la différence entre le niveau de ladite grandeur physique affectée à l'échantillon courant et le niveau de cette même grandeur physique affectée à un autre échantillon, par exemple un échantillon voisin de cet échantillon courant.

En pratique, les caractéristiques de l'encodage localisé du signal sont de préférence choisies pour que le nombre de bits de chaque signal numérique local encodé soit inférieur au nombre de bits sur lequel est représenté le niveau de la grandeur physique considérée.

Par exemple si les grandeurs physiques sont représentées par des mots de 10 à 16 bits, on choisira de préférence les caractéristiques de l'encodage localisé de façon à obtenir un signal encodé local sur un nombre de bits inférieur ou égal à 9, voire sur un nombre de bits bien plus faible.

Ainsi l'encodage localisé se traduit alors par une compression localisée.

Cela étant, il est possible que dans certaines applications, par exemple pour des grandeurs physiques représentées par des mots de 8 bits, l'encodage localisé conduise pour certains échantillons à un signal numérique local encodé sur un nombre de bits supérieur 8, par exemple 9 bits. Cependant il s'avère que pour d'autres échantillons le signal local peut être encodé sur un nombre de bits beaucoup plus faible, par exemple 3 bits, conduisant ainsi néanmoins globalement pour le signal encodé global en un signal compressé.

Chaque encodage localisé comporte avantageusement pour chaque grandeur physique affectée à l'échantillon courant considéré, un paramétrage numérique dudit repère local et du niveau de la grandeur physique considérée dans ledit repère local de façon à obtenir le signal encodé local associé à l'échantillon courant et à la grandeur physique considérée.

Le paramétrage du repère local peut comprendre l'élaboration d'un groupe de premiers bits dont les valeurs définissent la structure du repère local parmi un ensemble de structures possibles.

Ainsi, lorsque le bit de référence est forcé à sa première valeur logique, le signal numérique local encodé peut contenir alors uniquement le groupe de premiers bits et le bit de référence.

Comme indiqué ci-avant, on peut utiliser comme autre paramètre d'encodage, un autre seuil intervenant dans une opération de comparaison avec un paramètre de gradient.

Plus précisément, selon cet autre mode de mise en oeuvre, le paramétrage du niveau de la grandeur physique considérée dans le repère local comprend

une élaboration d'un paramètre dénommé ici paramètre de gradient, faisant intervenir au moins la valeur absolue du gradient, dit premier gradient, de ladite grandeur physique entre l'échantillon courant et un premier échantillon de référence,

une comparaison de ce paramètre de gradient à un deuxième seuil, et

une élaboration d'un bit de comparaison représentative du résultat de ladite comparaison.

Ce deuxième seuil est le deuxième paramètre d'encodage.

Ce paramètre de gradient peut être par exemple la valeur absolue du premier gradient lui-même ou bien un gradient normalisé.

L'utilisation d'un gradient normalisé apporte plus de précision et une meilleure qualité d'image mais pourrait nécessiter d'effectuer une division au sein de l'encodeur. L'utilisation de la valeur absolue du seul premier gradient est plus simple à mettre en oeuvre et s'avère suffisante dans la plupart des applications.

Le deuxième seuil pourra ainsi être avantageusement ajusté en fonction de l'évolution du taux de compression au cours de l'encodage par rapport au taux de compression cible.

Il est également possible que le paramétrage du niveau de la grandeur physique considérée dans le repère local comprenne une détermination d'un bit de polarité dont la valeur indique au moins le positionnement du niveau de la grandeur physique considérée affectée à l'échantillon courant par rapport au niveau de ladite grandeur physique affectée au premier échantillon de référence.

Et, si ledit paramètre de gradient est inférieur ou égal à ce deuxième seuil, le signal numérique local encodé peut alors contenir uniquement le groupe de premiers bits et le bit de comparaison tandis que si le paramètre de gradient est supérieur à ce deuxième seuil, le signal numérique local encodé contient alors le groupe de premiers bits, éventuellement le paramètre de gradient compressé, le bit de polarité et le bit de comparaison.

Afin d'améliorer encore la qualité du contrôle de l'encodage, il est possible de combiner les deux modes de mise en oeuvre précédemment indiqués, c'est-à-dire d'agir conjointement sur le premier seuil et le deuxième seuil mentionnés ci-avant.

En d'autres termes, le bit de comparaison est alors le bit de référence. Alors qu'on a vu ci-avant le bit de référence pouvait être forcé à une première valeur logique lorsque la valeur du masque associé à l'échantillon courant est inférieure ou égale au premier seuil (ce qui peut correspondre à forcer l'encodage à ne pas effectuer de compression locale du signal), la valeur de ce bit de comparaison (bit de référence) peut dépendre du résultat de la comparaison entre le paramètre de gradient et le deuxième seuil si la valeur du masque associé à l'échantillon courant est supérieure au premier seuil,.

De façon à également améliorer le contrôle dynamique de l'encodage, il est possible de prendre en compte une erreur de quantification cumulée et d'ajuster certains paramètres de façon à obtenir une erreur cumulée la plus faible.

En d'autres termes, selon un autre mode de mise en oeuvre, le paramétrage du niveau de la grandeur physique considérée dans le repère local comprend en outre en encodage compressif sur un groupe de deuxièmes bits dudit paramètre de gradient de façon à obtenir un paramètre de gradient compressé et le paramétrage du niveau de la grandeur physique considérée dans le repère local comprend en outre, pour le premier échantillon de la séquence,

a) une élaboration à partir du paramètre de gradient compressé d'un premier mot numérique complémentaire compressé et d'un deuxième mot numérique complémentaire compressé encadrant le paramètre de gradient compressé,

b) un décodage décompressif du premier mot numérique complémentaire compressé, une reconstruction du niveau de ladite grandeur physique à partir du premier mot numérique complémentaire décodé de façon à obtenir un premier niveau reconstruit pour ladite grandeur physique,

c) une élaboration d'une première erreur entre le niveau de grandeur physique considérée et ledit premier niveau reconstruit,

d) un décodage décompressif du deuxième mot numérique compressé,

e) une reconstruction du niveau de ladite grandeur physique à partir du deuxième mot numérique complémentaire décodé de façon à obtenir un deuxième niveau reconstruit pour ladite grandeur physique,

f) une élaboration d'une deuxième erreur entre le niveau de grandeur physique considérée et ledit deuxième niveau reconstruit,

g) une sélection de celui du premier ou du deuxième mot numérique complémentaire compressé qui donne l'erreur la plus faible parmi la première erreur et la deuxième erreur, et

pour chaque échantillon suivant,

h) une répétition des étapes a) à f), une élaboration d'une première erreur cumulée égale à la somme de ladite première erreur et de toutes les erreurs les plus faibles associées aux échantillons précédents, une élaboration d'une deuxième erreur cumulée égale à la somme de ladite deuxième erreur et de toutes les erreurs les plus faibles associées aux échantillons précédents, une sélection de celui du premier ou du deuxième mot numérique complémentaire compressé qui donne l'erreur la plus faible parmi la première erreur cumulée et la deuxième erreur cumulée, et

si le paramètre de gradient est inférieur ou égal audit deuxième seuil, il est alors considéré comme nul, et le signal numérique local encodé contient alors uniquement le groupe de premiers bits et le bit de comparaison, tandis que si le paramètre de gradient est supérieur audit deuxième seuil, le signal numérique local encodé contient alors le groupe de premiers bits, le mot numérique complémentaire compressé sélectionné, le bit de polarité et le bit de comparaison.

Il est également possible, dans un autre mode de mise en oeuvre, et toujours dans le but d'améliorer le contrôle de l'encodage, de classer chaque échantillon de la séquence dans une classe appartenant à un ensemble de classes et d'ajuster directement ou indirectement dans chaque classe séparément au moins un paramètre d'encodage, par exemple la valeur du premier seuil, en fonction de la classe intervenant dans lesdits encodages localisés de façon à stabiliser la valeur de ladite caractéristique sur ladite valeur cible, par exemple un taux de compression cible, à une tolérance près.

Ainsi, à titre d'exemple, ledit ensemble de classes comprend

- une première classe associée aux échantillons appartenant à une zone dans laquelle les gradients de ladite au moins une grandeur physique sont homogènes,
- une deuxième classe associée aux échantillons dont les gradients de ladite au moins une grandeur physique sont des extrema locaux (des minima ou des maxima locaux) et,
- une troisième classe associée aux échantillons appartenant à au moins un contour de l'espace multidimensionnel, par exemple un contour de l'image.

Il convient de noter ici que la densité d'échantillons de la deuxième classe contribue à déterminer le niveau de bruit du signal encodé qui peut alors par exemple être stabilisé sur une valeur cible en ajustant la valeur du premier seuil.

Bien entendu, les différents modes de mise en oeuvre qui viennent d'être envisagés pour améliorer la qualité du contrôle de l'encodage peuvent être utilisés séparément ou, pour certains au moins d'entre eux, en combinaison.

Par ailleurs, lorsque l'encodage localisé est conforme à celui décrit dans la demande de brevet français précédemment mentionnée, il peut comporter avantageusement les caractéristiques suivantes qui peuvent être utilisées dans tous les modes de mise en oeuvre précédemment décrits.

Plus précisément, chaque encodage localisé peut comporter pour chaque grandeur physique affectée à l'échantillon courant considéré, une détermination du repère local formé par ledit échantillon courant et les deux échantillons de référence sélectionnés au moins à partir d'une détermination du gradient ayant la plus faible valeur absolue parmi les gradients de la grandeur physique considérée entre ledit échantillon courant et au moins deux échantillons disponibles, par exemple deux échantillons voisins de cet échantillon courant.

Le premier échantillon de référence dudit repère local peut être sélectionné au moins à partir de ladite détermination du gradient ayant la plus faible valeur absolue parmi les gradients de la grandeur physique considérée, et le deuxième échantillon de référence est

un échantillon disponible restant formant avec ledit premier échantillon de référence et l'échantillon courant un angle droit, ou

un échantillon disponible restant sélectionné au moins à partir de ladite détermination du gradient ayant la plus grande valeur absolue parmi les gradients de la grandeur physique considérée.

Lorsque chaque échantillon est affecté de plusieurs grandeurs physiques, comme c'est le cas par exemple pour un pixel affecté de plusieurs composantes couleurs, il est possible de déterminer un repère local pour chaque grandeur physique associée à cet échantillon courant.

Cela étant, en pratique, il est préférable pour des raisons de simplicité, de déterminer, pour chaque échantillon courant, un repère local unique valable pour toutes les grandeurs physiques affectées à cet échantillon courant.

La détermination dudit repère local peut comprendre pour chaque échantillon courant appartenant à un groupe d'au moins trois échantillons incluant ledit échantillon courant et au moins deux échantillons disponibles, par exemple deux échantillons voisins de cet échantillon courant,

une première étape de détermination comportant pour chaque grandeur physique, une détermination des gradients de cette grandeur physique entre ledit échantillon courant et chaque échantillon disponible,

une étape de sélection du premier échantillon de référence comportant une sélection parmi lesdits échantillons disponibles, de l'échantillon disponible dont le gradient associé a la plus faible valeur absolue parmi tous les gradients calculés pour toutes les grandeurs physiques,

une deuxième étape de détermination du deuxième échantillon de référence comportant une détermination parmi les échantillons disponibles restants, de l'échantillon disponible formant avec ledit premier échantillon de référence et l'échantillon courant un angle droit ou correspondant à l'échantillon disponible dont le gradient associé a la plus grande valeur absolue parmi tous les gradients calculés pour toutes les grandeurs physiques.

Selon un mode avantageux de mise en oeuvre, particulièrement bien adapté à un « raster scan », pour chaque échantillon courant ledit groupe inclut ledit échantillon courant et quatre échantillons voisins ayant déjà donné lieu à l'établissement des signaux numériques locaux encodés associés à ces échantillons voisins, et le deuxième échantillon de référence est celui qui forme un angle droit avec le premier échantillon de référence et l'échantillon courant.

Par ailleurs le paramétrage du niveau de la grandeur physique considérée dans le repère local peut comprendre en outre avantageusement un encodage compressif sur un groupe de deuxièmes bits dudit paramètre de gradient de façon à obtenir le paramètre de gradient compressé.

Selon une variante possible, le bit de polarité indique si le niveau de la grandeur physique considérée affectée à l'échantillon courant se situe ou non entre le niveau de ladite grandeur physique affectée au premier échantillon de référence et le niveau de ladite grandeur physique affectée au deuxième échantillon de référence, et le paramétrage du niveau de la grandeur physique considérée dans le repère local comprend en outre

une détermination de la valeur absolue du gradient, dit deuxième gradient, de ladite grandeur physique entre l'échantillon courant et le deuxième échantillon de référence,

une détermination d'un gradient normalisé à partir des valeurs absolues du premier gradient et du deuxième gradient, ledit gradient normalisé formant ledit paramètre de gradient.

De façon à permettre une diffusion d'erreur, le paramétrage du niveau de la grandeur physique considérée dans le repère local peut comprendre en outre avantageusement une adjonction d'une quantité pseudo-aléatoire sur le paramètre ou sur le paramètre compressé.

Dans certains cas, la séquence d'échantillon peut être subdivisée en plusieurs sous-séquences. C'est par exemple le cas lorsque le signal est un signal vidéo codé en format $YC_bC_r$ 420. La première sous-séquence peut alors comporter les échantillons affectés des composantes $YC_bC_r$. La deuxième sous-séquence peut être composée des échantillons situés entre les échantillons de la première sous-séquence et la troisième sous-séquence peut être composée des échantillons affectés de la composante Y et entourée par les échantillons de la deuxième sous-séquence.

On peut alors effectuer des compressions localisées en parallèle ou séquentiellement sur chacune de ces sous-séquences.

De façon à obtenir une autre tolérance constante lors des encodages localisés, il peut être avantageux que le signal initial sur lequel on effectue ces encodages localisés, résulte d'un prétraitement effectué sur un signal de base, ce prétraitement comportant par exemple un traitement de pré-accentuation (« pre-emphasis » en langue anglaise).

Selon un autre aspect, il est proposé un procédé de décodage d'un signal numérique en un signal décodé, le signal numérique ayant été encodé par le procédé d'encodage tel que défini ci-avant, le procédé de décodage comprenant pour chaque échantillon courant et pour chaque grandeur physique, une élaboration du niveau de la grandeur physique considérée à partir du signal numérique local encodé associé à cet échantillon courant, de façon à délivrer un signal local décodé, le signal décodé comportant lesdits signaux locaux décodés.

Lorsque le signal numérique initial a été encodé à la suite d'un traitement de pré-accentuation, il est avantageux d'effectuer un post-traitement sur le signal décodé, ce post-traitement comportant un traitement de désaccentuation (« de-emphasis » en langue anglaise).

Selon un autre aspect, il est proposé un dispositif d'encodage d'un signal numérique initial en un signal encodé, le signal numérique initial comportant une séquence d'échantillons représentant un espace multidimensionnel, chaque échantillon étant affecté d'au moins une grandeur physique, comprenant des moyens de traitement configurés pour effectuer, pour certains au moins des échantillons courants, des encodages localisés du signal en des signaux numériques locaux encodés, le signal encodé comportant lesdits signaux numériques locaux encodés, une analyse à la volée d'une caractéristique associée au signal encodé, et un ajustement direct ou indirect au niveau échantillon, d'au moins un paramètre d'encodage intervenant dans lesdits encodages localisés de façon à stabiliser la valeur de ladite caractéristique sur une valeur cible à une tolérance près.

Selon un mode de réalisation, les moyens de traitement sont configurés pour effectuer ladite analyse à la volée comprenant une détermination de la valeur de ladite caractéristique sur un bloc courant d'échantillons de ladite séquence et pour effectuer ledit ajustement pour chaque échantillon du bloc suivant d'échantillons.

Selon un mode de réalisation, les moyens de traitement sont configurés pour appliquer un masque à ladite séquence d'échantillons, et pour effectuer ledit ajustement d'un premier paramètre d'encodage comprenant pour chaque échantillon courant, une comparaison de la valeur du masque associée à cet échantillon avec un premier seuil dont la valeur est ajustée en fonction de la valeur de ladite caractéristique par rapport à ladite valeur cible, le résultat de la comparaison conditionnant la valeur dudit premier paramètre d'encodage.

Le masque peut être du type bruit bleu ou une matrice statique comportant plusieurs valeurs prises parmi un jeu de valeurs de référence.

Ladite caractéristique peut être le taux de compression du signal encodé et la valeur du premier paramètre d'encodage définit la taille du signal numérique local encodé.

Selon un mode de réalisation, le premier paramètre d'encodage est un bit de référence, et les moyens de traitement sont configurés pour forcer le bit de référence à une première valeur logique lorsque la valeur du masque associée à l'échantillon courant est inférieure ou égale au premier seuil.

Selon un mode de réalisation, les moyens de traitement sont configurés pour effectuer les encodages localisés dans des repères locaux incluant chacun l'échantillon courant considéré et deux échantillons de référence choisis, sur la base d'un gradient minimal de ladite au moins une grandeur physique, parmi les échantillons disponibles de ladite séquence, et pour effectuer pour chaque grandeur physique affectée à l'échantillon courant considéré, un paramétrage numérique dudit repère local et du niveau de la grandeur physique considérée dans ledit repère local de façon à obtenir le signal encodé local associé à l'échantillon courant et à la grandeur physique considérée.

Selon un mode de réalisation, les moyens de traitement sont configurés pour effectuer, pour le paramétrage du repère local, une élaboration d'un groupe de premiers bits dont les valeurs définissent la structure du repère local parmi un ensemble de structures possibles.

Lorsque le bit de référence est forcé à sa première valeur logique, le signal numérique local encodé contient alors uniquement le groupe de premiers bits et le bit de référence.

Selon un mode de réalisation, les moyens de traitement sont configurés pour effectuer, pour le paramétrage du niveau de la grandeur physique considérée dans le repère local, une élaboration d'un paramètre de gradient faisant intervenir au moins la valeur absolue du gradient, dit premier gradient, de ladite grandeur physique entre l'échantillon courant et un premier échantillon de référence, une comparaison de ce paramètre de gradient à un deuxième seuil, et une élaboration d'un bit de comparaison représentatif du résultat de ladite comparaison, et dans lequel ledit deuxième seuil est un deuxième paramètre d'encodage.

Ce bit de comparaison peut être le bit de référence mentionné ci-avant.

Selon un mode de réalisation, les moyens de traitement sont configurés pour effectuer, pour le paramétrage du niveau de la grandeur physique considérée dans le repère local, une détermination d'un bit de polarité dont la valeur indique au moins le positionnement du niveau de la grandeur physique considérée affectée à l'échantillon courant par rapport au niveau de ladite grandeur physique affectée au premier échantillon de référence.

Selon un mode de réalisation, si ledit paramètre de gradient est inférieur ou égal audit deuxième seuil, le signal numérique local encodé contient alors uniquement le groupe de premiers bits et le bit de comparaison, et si le paramètre de gradient est supérieur audit deuxième seuil, le signal numérique local encodé contient alors le groupe de premiers bits, éventuellement le paramètre de gradient compressé, le bit de polarité et le bit de comparaison.

Selon un mode de réalisation, les moyens de traitement sont configurés pour effectuer, pour le paramétrage du niveau de la grandeur physique considérée dans le repère local, un encodage compressif sur un groupe de deuxièmes bits dudit paramètre de gradient de façon à obtenir un paramètre de gradient compressé et pour effectuer pour le paramétrage du niveau de la grandeur physique considérée dans le repère local, pour le premier échantillon de la séquence,

a) une élaboration à partir du paramètre de gradient compressé d'un premier mot numérique complémentaire compressé et d'un deuxième mot numérique complémentaire compressé encadrant le paramètre de gradient compressé,

b) un décodage décompressif du premier mot numérique complémentaire compressé, une reconstruction du niveau de ladite grandeur physique à partir du premier mot numérique complémentaire décodé de façon à obtenir un premier niveau reconstruit pour ladite grandeur physique,

c) une élaboration d'une première erreur entre le niveau de grandeur physique considérée et ledit premier niveau reconstruit,

d) un décodage décompressif du deuxième mot numérique compressé,

e) une reconstruction du niveau de ladite grandeur physique à partir du deuxième mot numérique complémentaire décodé de façon à obtenir un deuxième niveau reconstruit pour ladite grandeur physique,

f) une élaboration d'une deuxième erreur entre le niveau de grandeur physique considérée et ledit deuxième niveau reconstruit,

g) une sélection de celui du premier ou du deuxième mot numérique complémentaire compressé qui donne l'erreur la plus faible parmi la première erreur et la deuxième erreur, et

pour chaque échantillon suivant,

h) une répétition des étapes a) à f), une élaboration d'une première erreur cumulée égale à la somme de ladite première erreur et de toutes les erreurs les plus faibles associées aux échantillons précédents, une élaboration d'une deuxième erreur cumulée égale à la somme de ladite deuxième erreur et de toutes les erreurs les plus faibles associées aux échantillons précédents, une sélection de celui du premier ou du deuxième mot numérique complémentaire compressé qui donne l'erreur la plus faible parmi la première erreur cumulée et la deuxième erreur cumulée, et

si le paramètre de gradient est inférieur ou égal audit deuxième seuil, il est alors considéré comme nul, et le signal numérique local encodé contient alors uniquement le groupe de premiers bits et le bit de comparaison, tandis que si le paramètre de gradient est supérieur audit deuxième seuil, le signal numérique local encodé contient alors le groupe de premiers bits, le mot numérique complémentaire compressé sélectionné, le bit de polarité et le bit de comparaison (ou bit de référence).

Selon un mode de réalisation, chaque échantillon de la séquence est classé dans une classe appartenant à un ensemble de classes et les moyens de traitement sont configurés pour ajuster directement ou indirectement dans chaque classe séparément au moins un paramètre d'encodage intervenant dans lesdits encodages localisés de façon à stabiliser la valeur de ladite caractéristique sur ladite valeur cible, par exemple un taux de compression cible, à une tolérance près.

Selon un mode de réalisation, le signal numérique initial est un signal vidéo, chaque échantillon étant un pixel et chaque grandeur physique est une composante couleur du pixel.

Selon un autre aspect, il est proposé un dispositif de décodage d'un signal numérique encodé par le dispositif d'encodage tel que défini ci-avant, configuré pour délivrer un signal décodé, comprenant des moyens de traitement configurés pour, pour chaque échantillon courant, effectuer une élaboration du niveau de la grandeur physique considérée à partir du signal numérique local encodé associé à cet échantillon courant, de façon à délivrer un signal local décodé, le signal décodé comportant lesdits signaux locaux décodés.

Selon un autre aspect il est proposé un produit programme d'ordinateur chargeable directement dans une mémoire d'un système informatique, comprenant des portions de code de logiciel pour l'exécution du procédé d'encodage tel que défini ci-avant ou du procédé de décodage tel que défini ci-avant, lorsque ledit programme est exécuté sur ledit système informatique.

Selon un autre aspect il est proposé un support lisible par un système informatique, ayant des instructions exécutables par ordinateur adaptées pour provoquer l'exécution par le système informatique du procédé d'encodage tel que défini ci-avant ou du procédé de décodage tel que défini ci-avant.

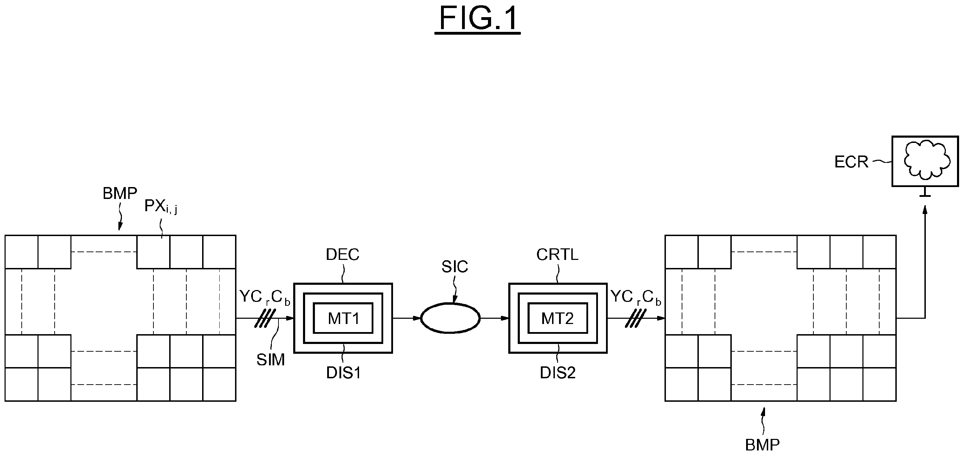

D'autres avantages et caractéristiques de l'invention apparaîtront à l'examen de la description détaillée de modes de mise en oeuvre et de réalisation, nullement limitatifs, et des dessins sur lesquels les figures 1 à 27 illustrent schématiquement différents modes de mise en oeuvre et de réalisation des procédés et dispositifs selon l'invention.

Sur la figure 1, la référence DIS1 désigne un dispositif d'encodage d'un signal d'image. Le dispositif DIS1 peut être incorporé dans un décodeur vidéo DEC, par exemple un décodeur TV conforme aux normes MPEG.

Le dispositif DIS1 reçoit un signal d'image initial SIM comportant une séquence BMP de pixels $PX_{i,j}$.

Chaque pixel est affecté de plusieurs composantes couleur numériques, ici trois composantes couleur, à savoir une composante de luminance Y, une composante de chrominance Cr et une autre composante de chrominance Cb.

La séquence BMP de pixels peut être une trame complète de l'image stockée par exemple dans une mémoire vidéo. En variante, les pixels de la trame de l'image peuvent être délivrés séquentiellement un par un et ligne par ligne (format « raster »). Les pixels de la séquence peuvent être également délivrés macrobloc par macrobloc. Dans ce cas, les macroblocs sont stockés dans une mémoire vidéo puis traités par le dispositif DIS1. Lorsque les pixels arrivent séquentiellement, dans un format du type raster, ils sont également stockés par exemple dans une mémoire vidéo de façon à être ultérieurement traités par le dispositif DIS 1.

Le dispositif DIS1 comporte des moyens de traitement MT1 pour traiter le signal d'image SIM et délivrer, pour chaque composante couleur, un signal d'image encodé SIC. Ce signal d'image encodé est en pratique un signal d'image compressé.

Ce signal d'image SIC est ensuite délivré via par exemple une liaison filaire, à un contrôleur d'écran CTRL comportant un dispositif de décodage DIS2. Le signal SIC est traité par des moyens de traitement MT2 qui reconstituent la séquence BMP de pixels affectés des trois composantes couleurs Y, Cr, Cb en vue de l'affichage de l'image sur un écran ECR, par exemple un écran d'un téléviseur haute définition.

Les moyens de traitement MT1 et MT2 peuvent être réalisés par exemple par des circuits intégrés spécifiques (ASIC) ou bien par des modules logiciels au sein de processeurs, ces modules logiciels pouvant être stockés dans des mémoires programmes, par exemple du type mémoire morte (ROM, EEPROM..).

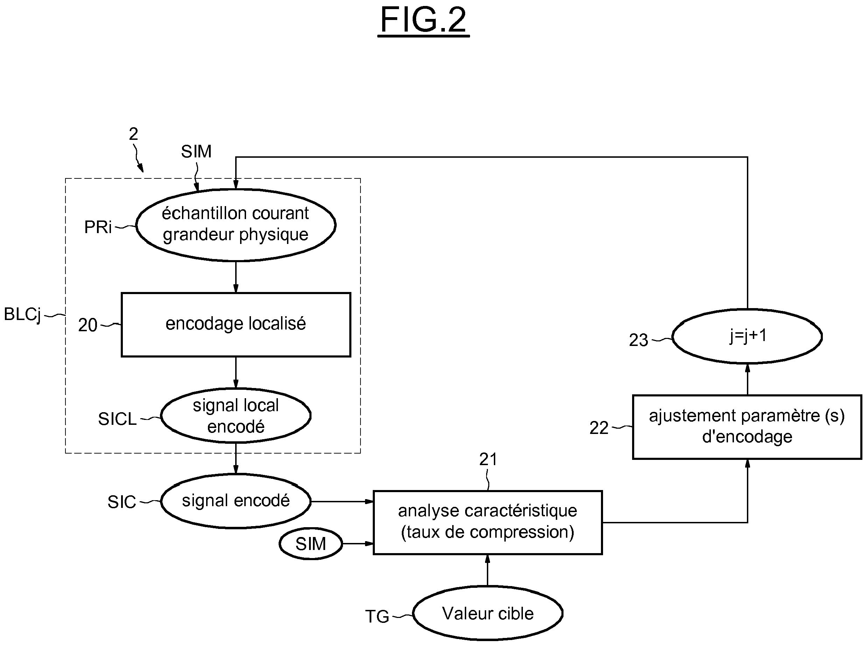

On va maintenant décrire plus en détail, en se référant plus particulièrement aux figures 2 et suivantes, des exemples de mises en oeuvre du procédé d'encodage du signal d'image SIM selon l'invention mis en oeuvre par les moyens de traitement MT1 du dispositif d'encodage DIS1 incorporé par exemple dans le décodeur MPEG DEC.

D'une façon générale, comme illustré sur la figure 2, le procédé d'encodage 2 comporte, pour certains au moins des échantillons courants PRi d'un bloc courant BLCj du signal d'image SIM, et pour chaque grandeur physique affectée à cet échantillon courant, un encodage localisé 20 du signal.

On obtient alors, pour cette grandeur physique et pour l'échantillon considéré, un signal numérique local encodé SICL. L'ensemble des signaux locaux encodés SICL associés à la grandeur physique considérée forment le signal d'image encodé SIC associé à la grandeur physique considérée.

On procède alors (étape 21) à une analyse à la volée d'une caractéristique associée au signal encodé SIC, par exemple le taux de compression de ce signal encodé.

Ce taux de compression est typiquement le rapport entre le nombre de bits du signal encodé SIC et le nombre de bits du signal initial SIM. Dans l'exemple décrit ici, cette analyse à la volée 21 comprend une détermination de la valeur de ladite caractéristique (par exemple taux de compression) sur le bloc courant BLCj d'échantillon de ladite séquence d'échantillons.

La taille de ce bloc courant peut être par exemple de l'ordre de 1000 à plusieurs milliers d'échantillons.

On procède alors à un ajustement 22, direct ou indirect, d'au moins un paramètre d'encodage intervenant dans lesdits encodages localisés de façon à stabiliser la valeur de ladite caractéristique (le taux de compression par exemple) sur une valeur cible TG (un taux de compression cible) à une tolérance près.

Et, bien que l'analyse à la volée ait été faite ici sur un bloc courant BLCj d'échantillons, ledit ajustement 22 est effectué pour chaque échantillon du bloc suivant d'échantillon BLCj+1 (étape 23).

Comme on va le voir plus en détail ci-après, cet ajustement peut être direct ou indirect.

En d'autres termes, il est possible dans certains cas que l'ajustement d'un paramètre d'encodage (typiquement un bit dont la valeur logique va par exemple indiquer que l'on n'effectue pas de compression) dépende d'un premier seuil qui va être lui-même directement ajusté en fonction du résultat de ladite analyse.

Dans ce cas, le paramètre d'encodage est indirectement ajusté par l'intermédiaire d'un paramètre intermédiaire, (en l'espèce le premier seuil) qui est lui-même directement ajusté de façon à stabiliser la valeur de la caractéristique (le taux de compression) sur la valeur cible TG.

Dans d'autres cas, le paramètre d'encodage peut être également un deuxième seuil qui va lui pouvoir être ajusté directement de façon à stabiliser la valeur du taux de compression sur la valeur cible TG.

Avant de revenir plus en détail sur des exemples de paramètres d'encodage qui vont pouvoir être ajustés de façon à stabiliser la valeur du taux de compression sur la valeur cible, on va maintenant décrire plus en détail un exemple particulier d'encodage localisé du type de celui décrit dans la demande de brevet français mentionnée ci-avant, bien que l'invention ne soit pas limitée à ce type d'encodage localisé.

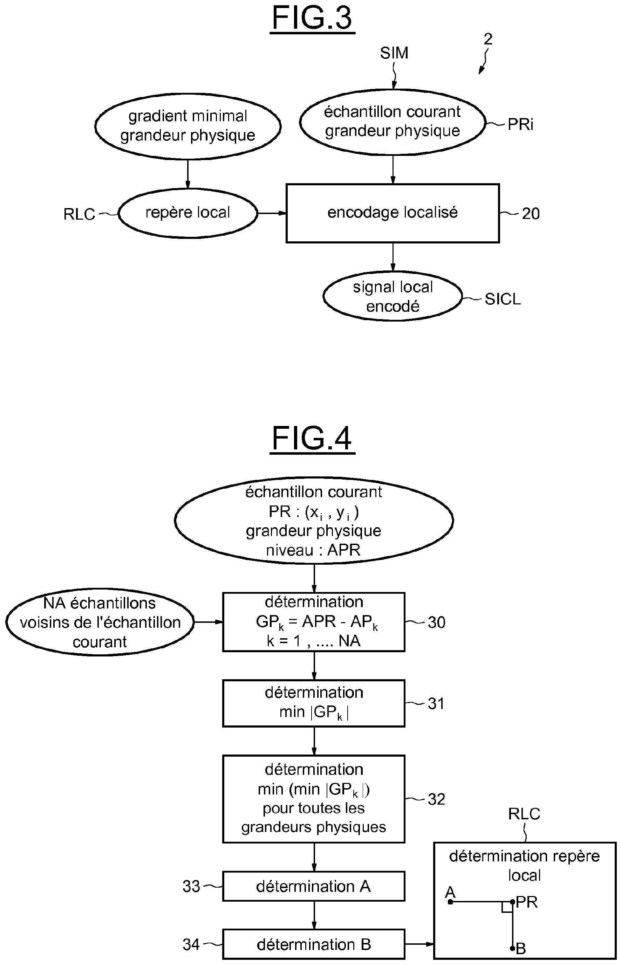

Plus précisément, les encodages localisés sont effectués (figure 3) dans des repères locaux RLC incluant chacun l'échantillon courant considéré et deux échantillons de référence choisis, sur la base d'un gradient minimal de ladite au moins une grandeur physique, parmi les échantillons disponibles de ladite séquence, par exemple au voisinage de l'échantillon courant.

Et, chaque encodage localisé 20 comporte pour chaque grandeur physique affectée à l'échantillon courant considéré, un paramétrage numérique du repère local RLC et du niveau de la grandeur physique considérée dans le repère local de façon à obtenir le signal encodé local SICL associé à l'échantillon courant et à la grandeur physique considérée.

On se réfère maintenant plus particulièrement à la figure 4 pour illustrer un mode de mise en oeuvre permettant de déterminer pour l'échantillon courant (pixel) considéré PR, le repère local RLC.

On sélectionne NA échantillons disponibles de la séquence, que l'on suppose être dans cet exemple NA échantillons voisins de l'échantillon courant, NA étant au minimum égal à 2. Puis, on détermine dans l'étape 30, pour la grandeur physique considérée ayant le niveau (amplitude) APR pour le pixel PR, le gradient $GP_k$ de la grandeur physique considérée entre l'échantillon courant PR et l'échantillon voisin dont la grandeur physique a le niveau $AP_k$.

Plus précisément, $GP_k$ est égal à la différence entre APR et $AP_k$.

Après avoir effectué cette détermination pour chacun des NA échantillons voisins de l'échantillon courant, on détermine, dans l'étape 31, le gradient ayant la plus faible valeur absolue parmi l'ensemble des gradients précédemment calculés $GP_k$.

Puis, on répète ces opérations pour toutes les grandeurs physiques affectées à l'échantillon courant et l'on détermine dans l'étape 32 le gradient ayant la plus faible valeur absolue parmi l'ensemble des gradients déterminés pour tous les échantillons voisins et toutes les grandeurs physiques.

L'échantillon voisin auquel est affecté ce gradient minimum est alors désigné comme étant un premier échantillon de référence A (étape 33).

Puis, on détermine un deuxième échantillon de référence B qui, dans le cas présent, est l'échantillon voisin restant formant avec l'échantillon A et l'échantillon courant PR un angle droit.

L'échantillon de référence PR et les deux échantillons de référence A et B forment ensemble le repère local RLC associé à l'échantillon courant PR.

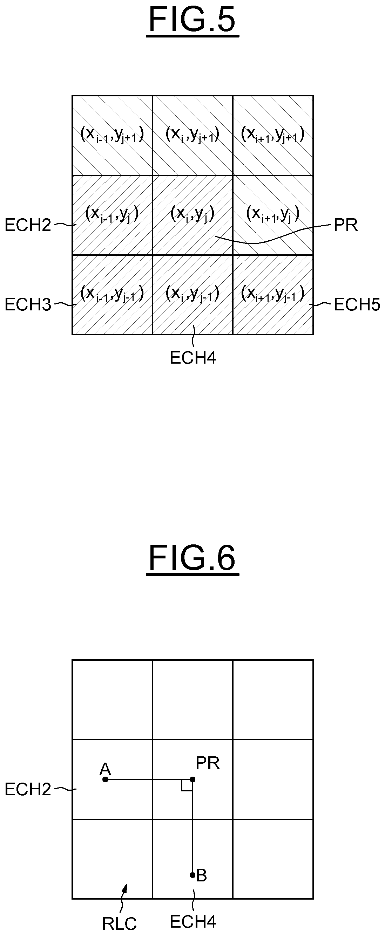

Des exemples possibles de repères locaux vont maintenant être illustrés en se référant plus particulièrement aux figures 5 à 9.

Sur la figure 5, on suppose que les pixels arrivent séquentiellement dans un format du type « raster ».

On suppose également sur la figure 5 que le pixel (échantillon) courant PR de coordonnées $x_i$ et $y_j$ est en cours de traitement et que les pixels précédents ECH2, ECH3, ECH4 et ECH5 ont déjà été traités par le procédé d'encodage.

Par contre, les autres pixels, c'est-à-dire le pixel de coordonnées $x_{i+1}, y_j$ appartenant à la ligne j ainsi que les pixels appartenant à la ligne j+1 n'ont pas encore été traités.

Par conséquent, les échantillons voisins du pixel PR, parmi lesquels vont être déterminés le premier échantillon de référence A et le deuxième échantillon de référence B sont les pixels ECH2, ECH3, ECH4 et ECH5.

Ce repère local déterminé RLC sera dans cet exemple, l'unique repère local associé à l'échantillon courant PR et valable pour l'encodage de toutes les grandeurs physiques, c'est-à-dire ici toutes les composantes couleurs, de l'échantillon courant.

Ainsi, sur la figure 6, le premier échantillon de référence A est l'échantillon ECH2 et le deuxième échantillon de référence B est l'échantillon ECH4.

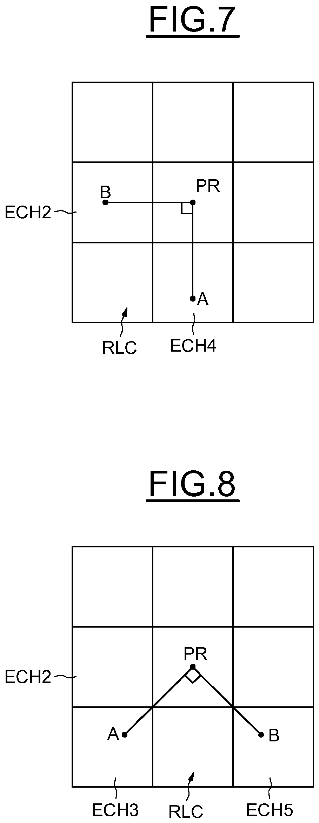

Une autre configuration possible est illustrée sur la figure 7, dans laquelle le premier échantillon de référence A est cette fois-ci l'échantillon ECH4 tandis que le deuxième échantillon de référence B est cette fois-ci l'échantillon ECH2.

Il est également possible, comme illustré sur la figure 8, d'avoir une autre structure pour le repère local RLC. Dans cette structure, le premier échantillon de référence A est l'échantillon ECH3 et le deuxième échantillon de référence B est l'échantillon ECH5.

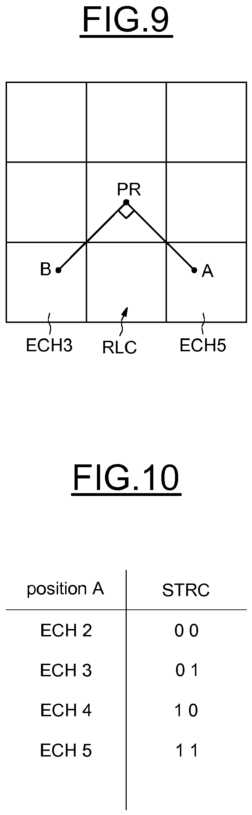

Dans la structure illustrée sur la figure 9, le premier échantillon de référence A est l'échantillon ECH5 et le deuxième échantillon de référence B est l'échantillon ECH3.

On voit donc qu'il est possible de définir un groupe de premiers bits permettant de paramétrer la structure du repère local.

Dans l'exemple décrit ici et comme illustré sur la figure 10, le groupe de premiers bits STRC comporte deux bits permettant de paramétrer les quatre positions possibles du premier échantillon de référence A et par conséquent les quatre structures possibles du repère local RLC.

Ainsi, dans l'exemple décrit ici, si le premier échantillon de référence A est l'échantillon ECH2, alors les deux bits STRC valent respectivement 00.

Si l'échantillon de référence A est l'échantillon ECH3 alors les deux bits STRC valent 01.

Si le premier échantillon de référence A est l'échantillon ECH4 alors les deux bits STRC valent 1 et 0 tandis que si le premier échantillon A est positionné au niveau de l'échantillon ECH5, alors les deux bits STRC valent 1 et 1.

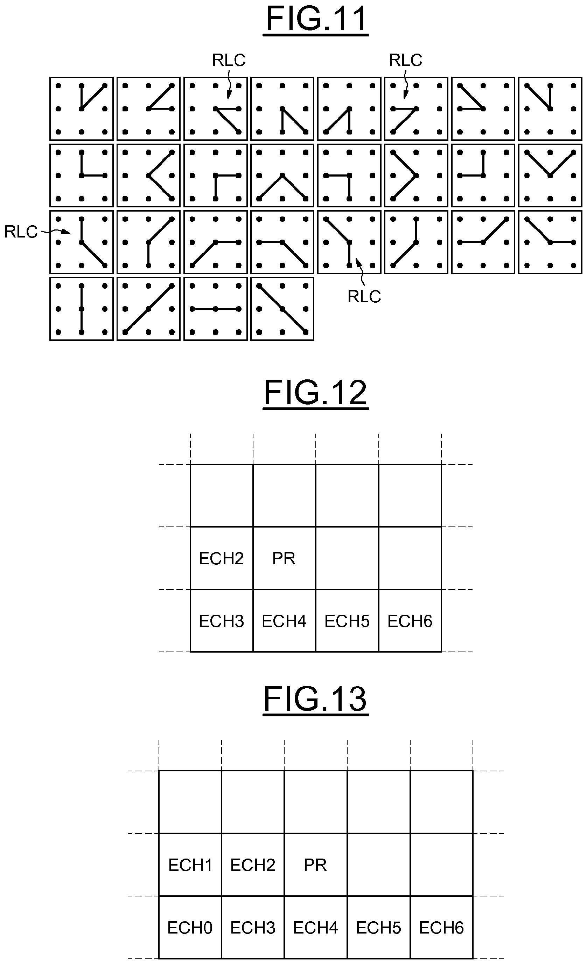

Comme illustré sur la figure 11, d'autres structures de repères locaux sont possibles, prévoyant non nécessairement un angle droit entre les deux lignes reliant respectivement l'échantillon courant aux deux échantillons de référence. Cela étant, alors que le premier échantillon de référence A reste toujours celui qui est associé au gradient ayant la plus faible valeur absolue, le deuxième échantillon de référence B est soit un échantillon formant avec l'échantillon courant et le premier échantillon de référence un angle droit, soit l'échantillon voisin de l'échantillon courant associé à la plus grande valeur absolue de tous les gradients calculés.

Par ailleurs, de tels repères locaux peuvent également être utilisés par exemple lorsqu'on traite l'image non pas dans un format « raster », mais par exemple macrobloc par macrobloc.

Dans les exemples qui viennent d'être décrits, les échantillons candidats utilisés pour la détermination des échantillons de référence A et B étaient des échantillons voisins de l'échantillon courant PR.

Cela étant, d'autres échantillons candidats disponibles sont possibles et peuvent être plus éloignés de l'échantillon courant PR.

C'est le cas dans les exemples illustrés sur les figures 12 et 13.

Sur la figure 12, outre les échantillons ECH2-ECH5, on peut prendre également en compte, pour la détermination des échantillons de référence A et B, l'échantillon ECH6.

Sur la figure 13, outre les échantillons ECH2-ECH5, on peut prendre également en compte, pour la détermination des échantillons de référence A et B, les échantillons ECH0, ECH1 et ECH6.

Bien entendu en fonction du nombre d'échantillons pris en compte et donc du nombre de structures possibles, le groupe de premiers bits STRC peut comprendre plus que 2 bits.

Le paramétrage du repère local ayant été effectué, les moyens de traitement MT1 sont configurés pour paramétrer, dans ce repère local, le niveau APR de la grandeur physique considérée.

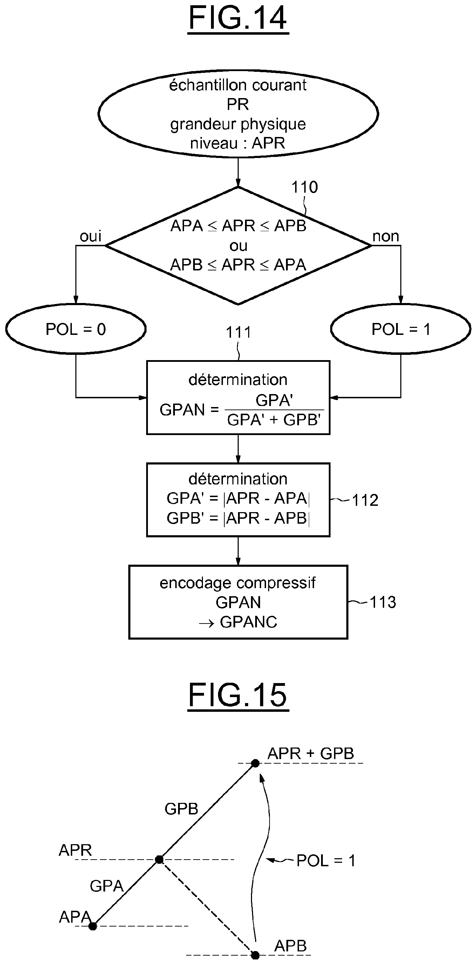

Une première variante possible est illustrée notamment sur la figure 14.

Dans l'étape 110, les moyens de traitement MT1 vérifient si le niveau de la grandeur physique APR se situe entre le niveau APA de la grandeur physique associée au premier échantillon de référence A et entre le niveau APB de la grandeur physique affectée au deuxième échantillon de référence B, ou bien entre APB et APA.

Si tel est le cas, on se situe dans un cas d'interpolation et les moyens de traitement affectent par exemple la valeur logique 0 à un bit de polarité POL.

Dans le cas contraire, on est dans un cas d'extrapolation c'est-à-dire que le niveau APR est soit supérieur ou égal au niveau APA qui est lui-même supérieur ou égal au niveau APB. Dans ce cas, les moyens de traitement confèrent la valeur 1 au bit de polarité POL.

Il convient de noter que dans le cas d'extrapolation, si le niveau APR est plus grand que les niveaux APA et APB, le niveau APB ne peut pas être supérieur au niveau APA car le premier échantillon de référence A est celui pour lequel il y a le gradient minimum.

De même, dans le cas où le niveau APR est inférieur aux deux niveaux APA et APB, le niveau APA ne peut pas être supérieur au niveau APB pour la même raison (gradient minimum pour le premier échantillon de référence A).

Une façon particulièrement simple de déterminer si l'on est dans un cas d'interpolation ou d'extrapolation consiste à déterminer du produit du signe du gradient GPA égal à APR-APA par le signe du gradient GPB égal à APR-APB.

Si le signe de ce produit est positif, alors le bit de polarité POL est mis à 1 (extrapolation) tandis que si le signe de produit est négatif, alors le bit de polarité POL est mis à zéro (interpolation).

Comme illustré sur la figure 15, dans le cas où l'on se situe dans une situation d'extrapolation, on se ramène à une situation d'interpolation en convertissant l'amplitude APB en une amplitude égale à APR + GPB, ce qui est une opération réversible au niveau de la décompression c'est-à-dire lors de la reconstruction du niveau APR, en prenant en compte le bit de polarité POL.

Dans l'étape 111, les moyens de traitement MT1 déterminent la valeur GPA' égale à la valeur absolue de GPA (GPA=APR-APA) ainsi que la valeur GPB' égale à la valeur absolue de GPB (GPB=APR-APB).

Puis, les moyens de traitement MT1 déterminent un paramètre de gradient qui est dans cet exemple de mise en oeuvre un gradient normalisé, à partir de GPA' et de GPB'.

Ce gradient normalisé GPAN est égal à GPA'/(GPA'+GPB').

Par ailleurs, puisque l'on a effectué une normalisation s'étendant entre les valeurs 0 et 1, le gradient normalisé GPAN est aussi égal à 1-(GPB'/(GPA'+GB')), à une erreur près.

Puis, les moyens de traitement effectuent dans l'étape 113 un encodage compressif du gradient normalisé GPAN de façon à obtenir un gradient normalisé compressé GPANC sur un groupe de deuxièmes bits. A titre indicatif, si le gradient normalisé GPAN est codé sur 10 bits, on peut prévoir de coder le gradient normalisé compressé GPANC sur cinq bits.

La compression s'effectue de façon classique et connue en soi à l'aide d'une courbe de compression.

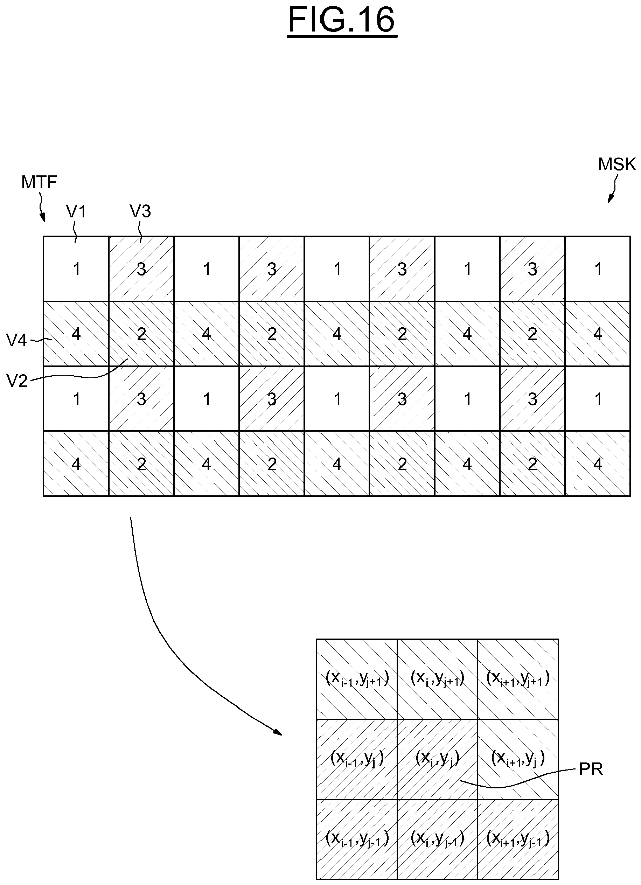

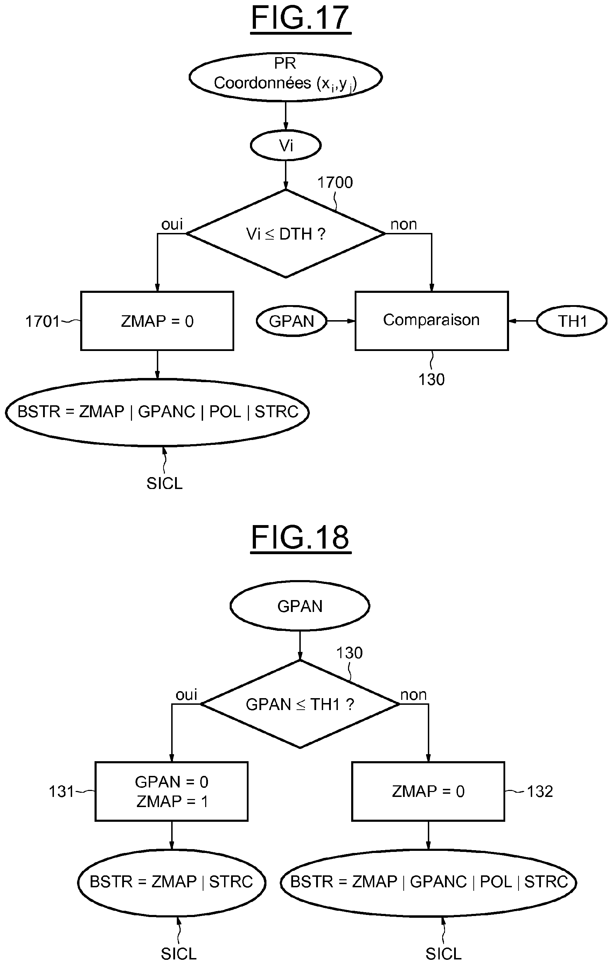

On se réfère maintenant plus particulièrement aux figures 16 et 17 pour illustrer un ajustement d'un premier paramètre d'encodage contribuant à stabiliser le taux de compression sur un taux de compression cible.

Comme on va le voir ci-après, ce premier paramètre d'encodage est un bit de référence ZMAP (figure 17) qui va être ajusté indirectement par l'intermédiaire d'un paramètre intermédiaire qui est un premier seuil DTH lequel va être ajusté directement en fonction de l'écart entre la valeur courante du taux de compression évaluée sur le bloc de pixels courant par rapport à la valeur cible TG de ce taux de compression.

Comme illustré sur la figure 16, on applique un masque MSK à la séquence d'échantillon.

D'une façon générale, ce masque MSK est un masque du type bruit bleu qui peut s'apparenter à une matrice. Une telle matrice est une matrice dite « de tremblement » (« dither » en langue anglaise) qui permet de moduler la densité d'échantillons qui vont se situer sous un certain seuil. Et ce premier seuil DTH va permettre d'absorber un taux maximal de correction tout en influant sur la qualité perceptuelle de l'image.

L'homme du métier sait élaborer des masques du type bruit bleu. A cet égard, il pourra par exemple se référer à l'article de J. Bacca Rodriguez et autres intitulé « Blue-noise Multitone Dithering », IEEE Transactions on Image Processing, vol. 17, n°8, août 2008.

Cela étant, l'utilisation comme masque MSK, d'une matrice statique (c'est-à-dire établie sans connaissance du contenu de l'espace multidimensionnel, en l'espèce du contenu de l'image, et donc suffisamment décorrélée du contenu de l'espace multidimensionnel) peut être suffisante dans certaines applications.

Comme illustré sur la figure 16, cette matrice statique MSK comporte ici un motif répétitif MTF de quatre valeurs V1-V4 prises parmi un jeu de valeurs de référence V1-V4. Dans l'exemple décrit ici, les valeurs V1-V4 valent respectivement 1-4.

Bien entendu l'exemple de matrice MSK décrit ici n'est pas limitatif et d'autres structures de matrices statiques comportant par exemple un motif répétitif de plus que quatre valeurs sont possibles. Plus généralement, il est possible de construire une telle matrice de façon à ce que pour chaque valeur de seuil prise parmi le jeu de valeurs possibles de référence, la densité d'échantillons situés au niveau ou sous cette valeur de seuil, c'est-à-dire le nombre de valeurs Vi du motif ( et donc le nombre de valeurs de la matrice puisque le motif est répétitif) égales ou inférieures à la valeur de seuil, est proportionnel à cette valeur de seuil, à une erreur près.

Ainsi dans l'exemple donné ci-avant, pour une densité de 1, le nombre de valeurs du motif inférieures ou égales à 1 est égal à 1.

Pour une densité de 2, le nombre de valeurs du motif inférieures ou égales à 2 est égal à 2.

Pour une densité de 3, le nombre de valeurs du motif inférieures ou égales à 3 est égal à 3.

Pour une densité de 4, le nombre de valeurs du motif inférieures ou égales à 4 est égal à 4.

Le facteur de proportionnalité dans le motif est donc de 1. Au sein de la matrice, il est bien entendu égal à k si la matrice comporte k motifs.

Par ailleurs, pour une densité donnée, c'est à dire pour une valeur de seuil donnée, la disposition au sein du motif, et donc au sein de la matrice, des valeurs correspondant à cette densité (par exemple l'ensemble des valeurs 1, 2 et 3 pour une densité de 3) est générée de façon pseudo-aléatoire de façon à être suffisamment décorrélée du contenu de l'espace multidimensionnel, en l'espèce de l'image.

Ainsi la disposition au sein du motif des valeurs illustrée sur la figure 16 n'est qu'un exemple et aurait pu être différente.

La matrice de densité MSK est appliquée de façon répétitive sur l'image en format « raster ».

Puis, comme illustré sur la figure 17, pour chaque échantillon courant (pixel) PR de coordonnées $x_i, y_j$, correspond l'une des valeurs Vi du masque MSK.

On compare alors (étape 1700) la valeur Vi du masque associée à cet échantillon avec le premier seuil DTH dont la valeur (prise parmi les quatre valeurs V1 à V4) a été choisie en fonction de la valeur du taux de compression déterminé sur le bloc d'échantillons précédent par rapport à la valeur cible. Et, le résultat de la comparaison va conditionner la valeur du premier paramètre d'encodage qui est ici le bit de référence ZMAP.

Et, la valeur de ce premier paramètre d'encodage ZMAP va définir la taille du signal numérique local encodé SICL.

Plus précisément, ce bit de référence ZMAP est forcé à une première valeur logique, par exemple la valeur 0, lorsque la valeur Vi du masque associée à l'échantillon courant est inférieure ou égale au premier seuil DTH (étape 1701).

Dans ce cas, le signal local encodé SICL relatif au niveau de la grandeur physique considérée comporte comme bloc numérique BSTR, le bit de référence ZMAP, le groupe de deuxièmes bits représentatif du gradient normalisé compressé GPANC, le bit de polarité POL et les premiers bits STRC représentatifs de la structure du repère local.

Bien entendu, l'ordre de ces différents bits dans le bloc numérique BSTR est totalement arbitraire et pourrait être différent.

En fait, dans ce cas, le forçage à 0 du paramètre d'encodage (bit de référence) ZMAP peut s'apparenter à un forçage à une non-compression locale du signal.

Si par contre dans l'étape 1700, la valeur Vi du masque associée à l'échantillon courant PR est supérieure au premier seuil DTH, alors on effectue une comparaison 130 du gradient normalisé GPAN avec un deuxième seuil TH1. Et, la valeur du paramètre d'encodage ZMAP va alors dépendre du résultat de cette comparaison 130 comme illustré sur la figure 18.

Ainsi, si le gradient normalisé est inférieur ou égal au deuxième seuil TH1, alors ZMAP est égal à 1 tandis que si le gradient normalisé GPAN est supérieur au deuxième seuil TH1, alors ZMAP = 0.

La valeur du deuxième seuil TH1 dépend de l'application et de la précision souhaitée pour la reconstruction de l'image.

A titre indicatif, on pourra choisir un deuxième seuil TH1 égal à 0,1.

Si le gradient normalisé GPAN est inférieur ou égal au seuil TH1, alors les moyens de traitement MT1 considèrent que ce gradient normalisé GPAN est nul (étape 131).

Dans ce cas, le signal local encodé STCL représentatif de la grandeur physique considérée affectée à l'échantillon comporte le bloc numérique BSTR qui ne comporte que le bit ZMAP et les premiers bits STRC représentatifs de la structure du repère local.

Par contre, si dans l'étape 132 le bit ZMAP a été mis égal à zéro, alors le signal local encodé SICL relatif au niveau de la grandeur physique considérée comporte comme bloc numérique BSTR, le bit ZMAP, le groupe de deuxièmes bits représentatifs du gradient normalisé compressé GPANC, le bit de polarité POL et les premiers bits STRC représentatifs de la structure du repère local.

Bien entendu, là encore l'ordre de ces différents bits dans le bloc numérique BSTR est totalement arbitraire et pourrait être différent.

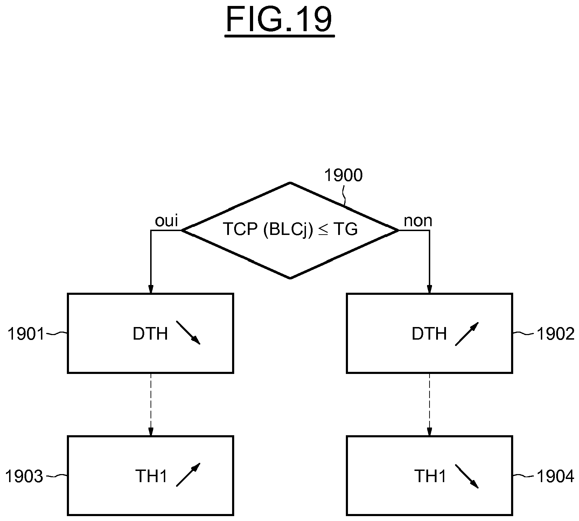

La figure 19 illustre maintenant schématiquement un exemple d'ajustement du premier paramètre d'encodage ZMAP de façon indirecte par un ajustement du premier seuil DTH ainsi que optionnellement un ajustement du deuxième seuil TH1 qui est considéré ici comme un deuxième paramètre d'encodage.

Ainsi, si par exemple le taux de compression TCP évalué sur le bloc courant BLCj d'échantillon est inférieur ou égal à la valeur cible TG (étape 1900) on peut alors, dans l'étape 1901, abaisser la valeur du seuil DTH dans la mesure bien entendu où l'on n'a pas atteint une valeur minimale.

Ainsi, si par exemple le seuil DTH avait été pris égal à 3 pour le bloc BLCj, on peut abaisser cette valeur à la valeur 2.

Si par contre le taux de compression TCP est, dans l'étape de comparaison 1900, supérieur à la valeur cible TG, on peut alors dans l'étape 1902 augmenter la valeur du premier seuil DTH, et ce bien entendu si l'on n'a pas déjà atteint la valeur maximale.

Et, cette nouvelle valeur pour le premier seuil DTH sera appliquée pour chaque pixel du bloc suivant d'échantillons BLCj+1.

On peut également optionnellement mais avantageusement, ajuster également la valeur du deuxième seuil TH1 qui est considéré alors comme un deuxième paramètre d'encodage.

Plus précisément, comme illustré sur la figure 19, dans le cas où l'on procède à une diminution de la valeur du premier seuil DTH dans l'étape 1901, on peut alors procéder à une augmentation de la valeur du deuxième seuil TH1 dans l'étape 1903.

A l'inverse, si dans l'étape 1902, on procède à une augmentation de la valeur du premier seuil DTH, on peut alors procéder dans l'étape 1904 à la diminution de la valeur du deuxième seuil TH1.

Et, là encore, ces nouvelles valeurs de seuil seront appliquées pour chaque pixel du bloc de pixels suivant.

Alors qu'on vient de décrire un ajustement combiné des deux seuils DTH et TH1, en fonction de l'écart entre le taux de compression courant et la valeur-cible, il serait possible bien entendu de n'ajuster que le premier seuil DTH ou éventuellement de considérer ce seuil DTH comme constant et de n'ajuster que le deuxième seuil TH1.

Outre le ou les ajustement(s) du premier paramètre d'encodage et/ou du deuxième paramètre d'encodage qui viennent d'être décrits, il est possible de contrôler dynamiquement l'erreur de quantification pour chaque pixel sur la base d'une erreur cumulée minimale qui a été cumulée pour tous les pixels précédant le pixel courant.

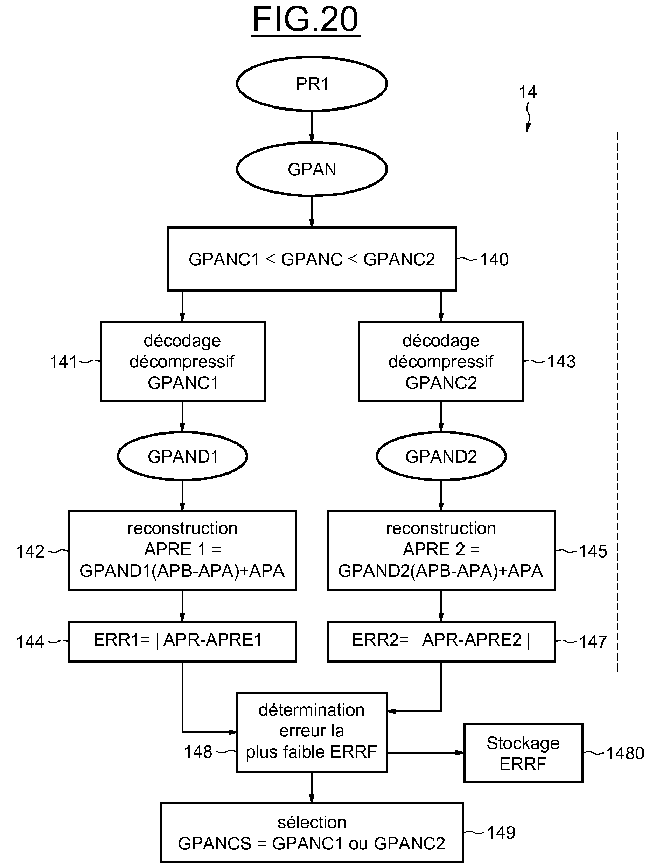

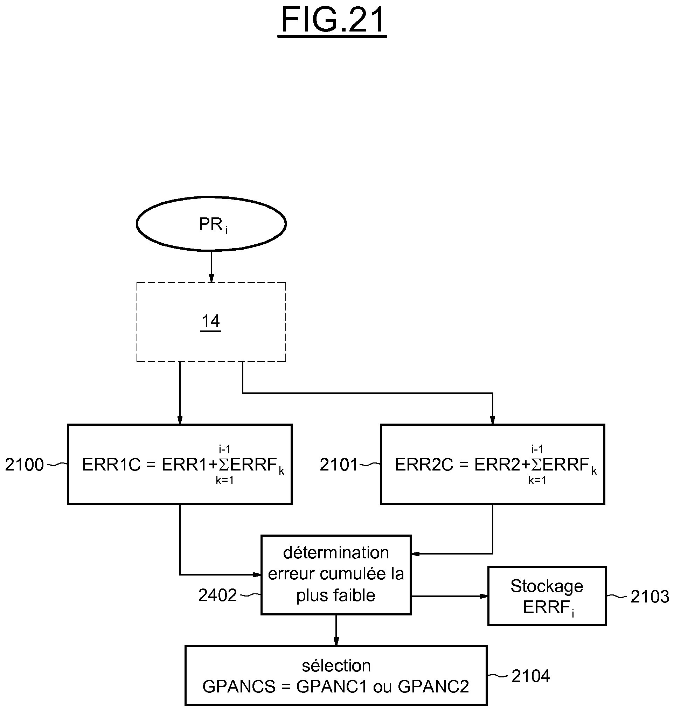

Ceci va maintenant être décrit plus en détail en se référant plus particulièrement aux figures 20 et 21.

Les moyens de traitement MT1 élaborent, pour le premier échantillon PR1 de la séquence, dans l'étape 140 à partir du gradient normalisé compressé GPANC un premier mot numérique complémentaire compressé GPANC1 et un deuxième mot numérique complémentaire compressé GPANC2 encadrant le gradient normalisé compressé GPANC.

D'une façon générale, le terme « encadrant » doit être pris dans un sens très large. Ainsi, les mots GPANC 1 et GPANC2 peuvent être différents de GPANC. Cela étant, en pratique, l'un des deux mots GPANC1 ou GPANC2 peut être pris égal au mot GPANC. Et, dans le cas présent, on choisira par exemple le premier mot GPANC1 égal au gradient normalisé compressé GPANC tandis que le mot numérique complémentaire GPANC2 sera par exemple légèrement supérieur au gradient normalisé compressé GPANC, par exemple en augmentant de 1 le bit de poids faible (LSB) du gradient normalisé compressé GPAC.

Les moyens de traitement MT1 effectuent ensuite un décodage décompressif 141 du premier mot numérique complémentaire GPANC1, en utilisant la même courbe que celle utilisée pour la compression.

On obtient alors un premier mot numérique complémentaire décompressé GPAND1.

Puis, les moyens de traitement MT1 reconstruisent le niveau APRE1 de la grandeur physique considérée à partir du mot GRAND1 et des niveaux APB et APA.

Plus précisément, APRE1 est égal à GPAND1(APB-APA)+APA.

Les moyens de traitement déterminent alors dans l'étape 144 une première erreur ERR1 égale à la valeur absolue de la différence entre APR et APRE1.

De la même façon, les moyens de traitement MT1 effectuent un décodage décompressif du deuxième mot numérique complémentaire GPANC2 de façon à obtenir un mot décompressé GPAND2 puis reconstruisent, à l'étape 145, le niveau APRE2 de la grandeur physique considérée à partir du mot GPAND2 et des niveaux APB et APA, d'une façon analogue à ce qui a été fait dans l'étape 142.

Les moyens de traitement déterminent alors une deuxième erreur ERR2 dans l'étape 147 égale à la valeur absolue de la différence entre APR et APRE2.

Les moyens de traitement MT1 déterminent alors dans l'étape 148 l'erreur la plus faible ERRF et sélectionnent par conséquent dans l'étape 149 le mot numérique complémentaire compressé sélectionné GPANCS comme étant celui des deux mots GPANC1 ou GPANC2 associé à l'erreur la plus faible.

Par ailleurs, cette la plus faible ERRF est stockée dans un registre d'accumulation (étape 1480).

Puis, comme illustré sur la figure 21, pour chaque échantillon courant suivant PRi, on répète le bloc d'étape 14 de la figure 20 et on élabore dans une étape 2100 une première erreur cumulée ERR1C égale à la somme de la première erreur ERR1 et de toutes les erreurs les plus faibles ERRFk (k= 1 à i-1) associées aux échantillons précédents.

De même, dans l'étape 2101, on élabore une deuxième erreur cumulée ERR2C égale à la somme de la deuxième erreur ERR2 et de toutes les erreurs les plus faibles ERRFk associées aux échantillons précédents.

Puis, on détermine dans l'étape 2102 quelle est l'erreur cumulée la plus faible parmi les deux erreurs cumulées ERR1C et ERR2C.

On sélectionne alors dans l'étape 2104 celui du premier mot numérique complémentaire compressé GPANC1 ou du deuxième mot numérique complémentaire compressé GPANC2 qui donne l'erreur la pus faible parmi la première erreur cumulée et la deuxième erreur cumulée.

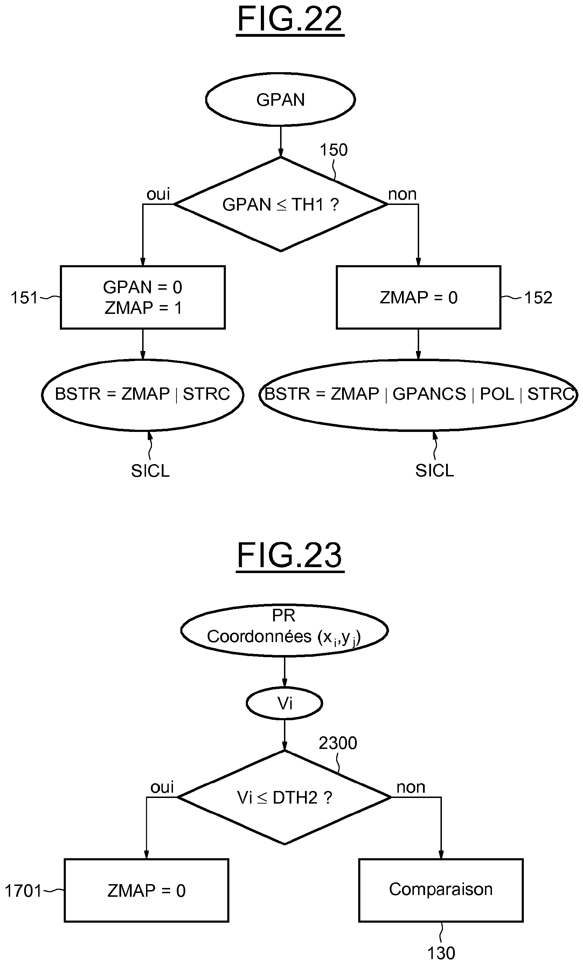

Et, comme illustré sur la figure 22, dans le cas où le bit ZMAP est égal à zéro, le signal local encodé SICL comporte le bloc numérique BSTR incluant cette fois-ci le mot numérique comprimé sélectionné GPANCS à la place du gradient normalisé compressé GPANC.

Dans une autre variante, il serait possible d'utiliser comme paramètre, non pas le gradient normalisé GPAN, mais directement GPA' c'est-à-dire la valeur absolue de la différence entre APR et APA, c'est-à-dire la valeur absolue du premier gradient GPA comme cela a été décrit dans la demande de brevet français précédemment mentionnée.

De façon à disperser de façon aléatoire l'erreur de quantification, il est particulièrement avantageux de rajouter au gradient normalisé GPAN ou bien au gradient normalisé compressé GPAC ou bien à GPA' une grandeur pseudoaléatoire.

De façon à affiner encore le contrôle dynamique de l'encodage pour obtenir une meilleure stabilisation du taux de compression vis-à-vis du taux de compression cible, il est particulièrement avantageux, comme illustré sur la figure 23, de classer chaque échantillon PR de la séquence dans une classe appartenant à un ensemble de classes, ici par exemple trois classes CL1, CL2, CL3, et d'ajuster au moins la valeur du premier seuil DTH en fonction de la classe.

Ainsi, on affectera à la classe CL1 un premier seuil DTH1, à la classe CL2 un premier seuil DTH2 et à la classe CL3 un premier seuil DTH3.

Dans l'exemple illustré sur la figure 23, on suppose que le pixel courant PR appartient à la classe CL2. Dans ce cas, on compare dans l'étape 2300 la valeur Vi associée à ce pixel PR dans le masque MSK par rapport au seuil DTH2 pour déterminer si comme décrit en référence à la figure 17, on force le bit ZMAP à zéro dans l'étape 1701 ou si l'on procède à l'étape de comparaison 130.

A titre indicatif, l'ensemble de classes comprend ici

- une première classe CL1 associée aux échantillons appartenant à une zone dans laquelle les gradients de ladite au moins une grandeur physique sont homogènes,

- une deuxième classe CL2 associée aux échantillons dont les gradients de ladite au moins une grandeur physique sont des extrema locaux, et
- une troisième classe associée aux échantillons appartenant à au moins un contour de l'espace multidimensionnel, en l'espèce un contour de l'image.

A titre d'exemple, la classe 1 contient chaque pixel dont le gradient est inférieur ou égal à une valeur limite, par exemple 0,01. A titre d'exemple, la classe 3 contient chaque pixel dont le gradient est supérieur ou égal à cette valeur limite, par exemple 0,01.

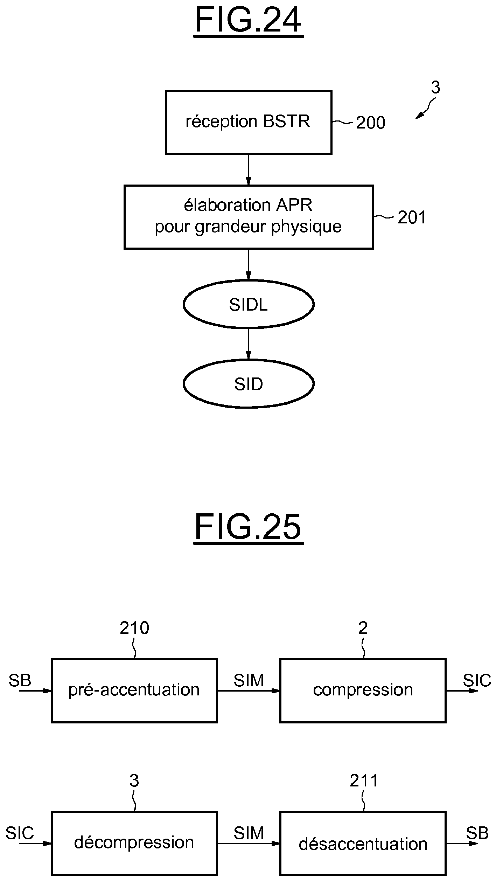

En réception, comme illustré sur la figure 24, les moyens de traitement MT2 vont élaborer, pour chaque échantillon courant et pour chaque grandeur physique affectée à cet échantillon courant, le niveau de la grandeur physique considérée à partir du bloc numérique BSTR reçu dans l'étape 200 de façon à délivrer un signal local décodé SIDL, c'est-à-dire à délivrer le niveau de la grandeur physique considérée.

L'ensemble des signaux locaux décodés SIDL forme un signal décodé SID.

Cette élaboration va tenir compte du contenu du bloc numérique BSTR reçu, et notamment des valeurs des bits ZMAP, et STRC, et éventuellement des bits POL et GPAC ou POL et GPANC.

On suppose ici que le paramètre éventuellement utilisé était le gradient normalisé GPAN.

Si le bit ZMAP est égal à 1, cela signifie que l'on était dans le cas où GPAN était nul et par conséquent, la valeur de la grandeur physique affectée à l'échantillon courant PR est alors simplement égale à la valeur APA de cette grandeur physique affectée à l'échantillon de référence A.

Cet échantillon A a déjà été traité précédemment.

Par conséquent, la valeur APA est connue.

En outre, les bits STRC permettent de déterminer la configuration du repère local et par conséquent les coordonnées de cet échantillon A dans la matrice de pixels.

Dans le cas où le bit ZMAP est égal à zéro, plusieurs cas sont à envisager.

Dans le cas où le bit de polarité POL est à 1, c'est-à-dire dans le cas où l'on se trouvait dans une configuration d'extrapolation, le niveau APR de la grandeur physique considérée est recalculé à partir de la formule suivante :

$$APR=APA+(APB-APA)GPAN/(2GPAN-1) \qquad (1)$$

Dans cette formule, GPAN a été obtenu par un décodage décompressif de GPANC (ou de GPANCS).

Il convient de noter que la formule (1) est valable pour les deux cas possibles d'extrapolation c'est-à-dire dans le cas où APB est inférieur ou égal à APA lui-même inférieur ou égal à APR, et dans le cas ou APB est supérieur ou égal à APA lui-même supérieur ou égal à APR.

Dans le cas où le bit de polarité POL est nul, c'est-à-dire que l'on est dans un cas d'interpolation, le niveau APR de la grandeur physique considérée est recalculé à partir de la formule (2) ou de la formule (3) ci-dessous :

$$APR=APA-APA.GPAN+APB.GPAN \qquad (2)$$

$$APR=APB+APA.GPAN-APB.GPAN \qquad (3)$$

selon que APA est plus petit ou plus grand que APB, respectivement.

Plus précisément, si APA est inférieur ou égal à APR lui-même inférieur ou égal à APB, alors la formule (2) s'applique.

Si APB est inférieur ou égal à APR lui-même inférieur ou égal à APA, alors la formule (3) s'applique.

Et, la condition APA plus petit ou plus grand que APB est déterminée par les moyens de traitement MT2 eux-mêmes puisque ces niveaux sont déjà connus car affectés à des échantillons déjà traités.

Dans le cas où le paramètre utilisé lors de l'encodage est la valeur absolue GPA' du premier gradient GPA (GPA'=|GPA|=|APR-APA|), et que le bit POL est représentatif du signe de APR-APA ((POL)=sign(APR-APA)), alors dans le cas où ZMAP=0, le niveau APR de la grandeur physique affectée à l'échantillon courant PR est reconstruit par les formules suivantes :

$$APR=APA+GPAC \ si \ POL=0$$

$$APR = APA - GPAC \text{ si } POL = 1$$

GPAC étant le paramètre compressé reçu dans le bloc numérique BSTR.

Bien entendu si ZMAP=1, alors comme dans la variante précédente, APR=APA.

L'invention n'est pas limitée aux modes de mise en oeuvre et de réalisation qui viennent d'être décrits mais en embrasse toutes les variantes.

Ainsi, comme illustré sur la figure 25, il est particulièrement avantageux de faire précéder l'encodage 2 par un pré-traitement de pré-accentuation (« pre-emphasis ») effectué par exemple de façon classique par une correction y ($x^{-\gamma}$) ou à l'aide d'une courbe de quantification perceptuelle ou alors avec une courbe du type S ou à l'aide d'une table (« look up table »).

Dans ce cas, le décodage 3 est suivi d'un post-traitement 211 de désaccentuation (« de-emphasis ») utilisant une fonction inverse de la fonction utilisée dans le traitement 210.

Dans certains cas, la séquence d'échantillons, par exemple la séquence de pixels, peut être décomposée en sous-séquences.

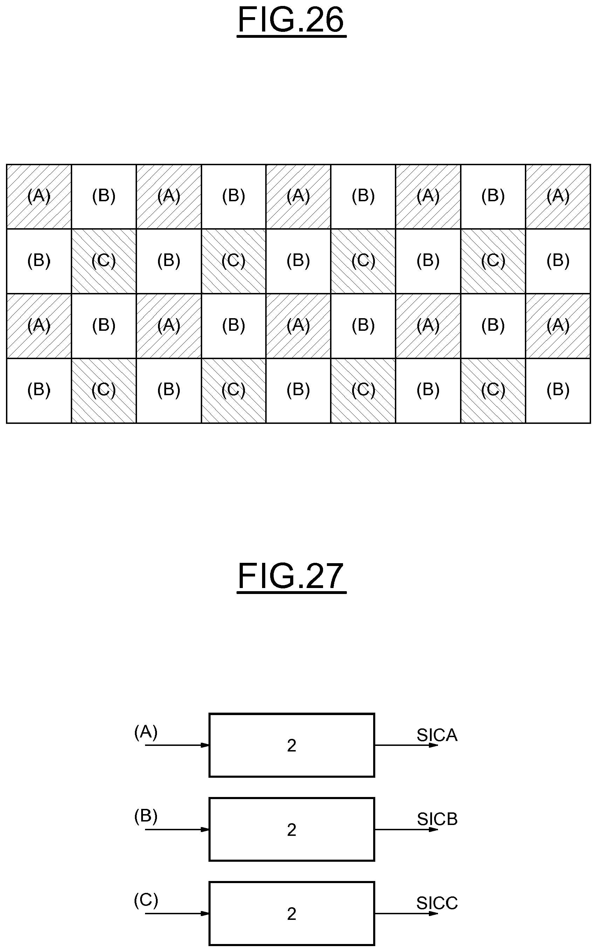

C'est le cas par exemple, comme illustré sur la figure 26, où les pixels sont encodés au format YCB 420.

Plus précisément, la sous-séquence (A) (des pixels) comporte les pixels affectés des composantes $YC_bC_r$.

La sous-séquence (B) comporte les pixels affectés des composantes Y et la sous-séquence (C) comprend les pixels encadrés par les pixels de la sous-séquence (B) et affectés eux aussi de la composante Y.

Dans ce cas, les moyens de traitement MT1 peuvent appliquer successivement ou en parallèle (figure 27) le traitement d'encodage et la boucle d'ajustement de paramètre(s) d'encodage qui viennent d'être décrits sur les sous-séquences (A), (B) et (C) respectivement, de façon à délivrer des signaux encodés SICA, SICB et SICC. Bien entendu, dans ce cas, pour la sous-séquence (A) par exemple, les pixels voisins d'un pixel courant (A) seront choisis parmi les pixels (A) adjacents à ce pixel courant (A).

Il en est de même par analogie pour les pixels (B) et (C).

Par ailleurs, dans certains cas, certains échantillons peuvent ne pas être soumis au traitement d'encodage qui vient d'être décrit.

Plus précisément, pour certaines positions d'échantillon prédéfinies, qui sont connues par le dispositif d'encodage et le dispositif de décodage, il serait possible de transmettre directement pour chaque grandeur physique considérée, son niveau APR sans qu'il soit nécessaire de transmettre le bit ZMAP. C'est le cas par exemple pour chaque pixel de la première ligne et de la première colonne d'une trame ou d'un macrobloc ou encore pour les premiers pixels d'une trame ou d'un macrobloc examinés de façon hélicoïdale.

Par ailleurs, dans certaines applications nécessitant notamment une précision plus élevée, il est possible, après avoir déterminé le bit ZMAP pour un échantillon courant, de ne pas calculer le gradient normalisé compressé GPANC ou la valeur absolue GPA' du premier gradient GPA et de transmettre directement le niveau APR de la grandeur physique considérée.

Dans ce cas, si le bit ZMAP est égal à zéro, alors le bloc numérique BSTR comprend le bit ZMAP suivi du niveau APR tandis que si le bit ZMAP est égal à 1, le bloc numérique BSTR comprend ce bit ZMAP suivi des premiers bits STRC.

**Revendications**

1. Procédé d'encodage d'un signal numérique initial (SIM) en un signal encodé (SIC), le signal numérique initial (SIM) comportant une séquence d'échantillons représentant un espace multidimensionnel, chaque échantillon étant affecté d'au moins une grandeur physique, le procédé comprenant pour certains au moins des échantillons courants des encodages localisés (20) du signal en des signaux numériques locaux encodés (SICL), le signal encodé (SIC) comportant lesdits signaux numériques locaux encodés (SICL), une analyse à la volée (21) d'une caractéristique associée au signal encodé, et un ajustement direct ou indirect (22) au niveau échantillon, d'au moins un paramètre d'encodage intervenant dans lesdits encodages localisés de façon à stabiliser la valeur de ladite caractéristique sur une valeur cible (TG) à une tolérance près.

2. Procédé selon la revendication 1, dans lequel ladite analyse à la volée comprend une détermination de la valeur de ladite caractéristique sur un bloc courant d'échantillons de ladite séquence et ledit ajustement est effectué pour chaque échantillon du bloc suivant d'échantillons.

3. Procédé selon l'une des revendications précédentes, comprenant en outre une application d'un masque (MSK) à ladite séquence d'échantillons, et ledit ajustement d'un premier paramètre d'encodage (ZMAP) comprend pour chaque échantillon courant, une comparaison de la valeur (Vi) du masque associée à cet échantillon avec un premier seuil (DTH) dont la valeur est ajustée en fonction de la valeur de ladite caractéristique par rapport à ladite valeur cible (TG), le résultat de la comparaison conditionnant la valeur dudit premier paramètre d'encodage (ZMAP).

4. Procédé selon la revendication 3, dans lequel le masque (MSK) est un masque du type bruit bleu ou une matrice statique comportant plusieurs valeurs prises parmi un jeu de valeurs de référence (Vi).

5. Procédé selon la revendication 3 ou 4, dans lequel ladite caractéristique est le taux de compression du signal encodé, et la valeur dudit premier paramètre d'encodage (ZMAP) définit la taille du signal numérique local encodé (SICL).

6. Procédé selon l'une des revendications 3 à 5, dans lequel le premier paramètre d'encodage est un bit de référence (ZMAP) qui est forcé (1701) à une première valeur logique (0) lorsque la valeur (Vi) du masque associée à l'échantillon courant est inférieure ou égale au premier seuil (DTH).

7. Procédé selon l'une des revendications précédentes, dans lequel les encodages localisés sont effectués dans des repères locaux (RLC) incluant chacun l'échantillon courant considéré et deux échantillons de référence choisis, sur la base d'un gradient minimal de ladite au moins une grandeur physique, parmi les échantillons disponibles de ladite séquence, et chaque encodage localisé (2) comporte pour chaque grandeur physique affectée à l'échantillon courant considéré, un paramétrage numérique dudit repère local (RLC) et du niveau (APR) de la grandeur physique considérée dans ledit repère local de façon à obtenir le signal encodé local associé à l'échantillon courant (PR) et à la grandeur physique considérée.

8. Procédé selon la revendication 7, dans lequel le paramétrage du repère local comprend une élaboration d'un groupe de premiers bits (STRC) dont les valeurs définissent la structure du repère local parmi un ensemble de structures possibles.

9. Procédé selon les revendications 6, 7 et 8, dans lequel lorsque le bit de référence (ZMAP) est forcé à sa première valeur logique (0), le signal numérique local encodé contient alors uniquement le groupe de premiers bits (STRC) et le bit de référence (ZMAP).

10. Procédé selon la revendication 7 ou 8, dans lequel le paramétrage du niveau de la grandeur physique considérée dans le repère local comprend une élaboration d'un paramètre de gradient (GPA, GPAN) faisant intervenir au moins la valeur absolue du gradient (GPA), dit premier gradient, de ladite grandeur physique entre l'échantillon courant et un premier échantillon de référence, une comparaison (130) de ce paramètre de gradient à un deuxième seuil (TH1), et une élaboration d'un bit de comparaison (ZMAP) représentatif du résultat de ladite comparaison, et dans lequel ledit deuxième seuil (TH1) est un deuxième paramètre d'encodage.

11. Procédé selon la revendication 7, 8 ou 10, dans lequel le paramétrage du niveau de la grandeur physique considérée dans le repère local comprend une détermination d'un bit de polarité (POL) dont la valeur indique au moins le positionnement du niveau de la grandeur physique considérée affectée à l'échantillon courant par rapport au niveau (APA) de ladite grandeur physique affectée au premier échantillon de référence.

12. Procédé selon les revendications 8, 10 et 11, dans lequel si ledit paramètre de gradient est inférieur ou égal audit deuxième seuil, le signal numérique local encodé contient alors uniquement le groupe de premiers bits (STRC) et le bit de comparaison (ZMAP), et si le paramètre de gradient est supérieur audit deuxième seuil, le signal numérique local encodé contient alors le groupe de premiers bits (STRC), éventuellement le paramètre de gradient compressé (GPANC, GPAC), le bit de polarité (POL) et le bit de comparaison (ZMAP).

13. Procédé selon les revendications 6 et 12, dans lequel le bit de comparaison est le bit de référence (ZMAP), et si la valeur ($V_i$) du masque associée à l'échantillon courant est supérieure au premier seuil (DTH), la valeur du bit de comparaison (ZMAP) dépend du résultat de la comparaison (130) entre le paramètre de gradient et le deuxième seuil (TH1).

14. Procédé selon la revendication 10, dans lequel le paramétrage du niveau de la grandeur physique considérée dans le repère local comprend en outre en encodage compressif sur un groupe de deuxièmes bits dudit paramètre de façon à obtenir un paramètre de gradient compressé (GPANC, GPAC) et le paramétrage du niveau de la grandeur physique considérée dans le repère local comprend en outre, pour le premier échantillon (PR1) de la séquence,

a) une élaboration (140, 170) à partir du paramètre de gradient compressé d'un premier mot numérique complémentaire compressé et d'un deuxième mot numérique complémentaire compressé encadrant le paramètre de gradient compressé,

b) un décodage décompressif (141, 171) du premier mot numérique complémentaire compressé, une reconstruction (142, 172) du niveau de ladite grandeur physique à partir du premier mot numérique complémentaire décodé de façon à obtenir un premier niveau reconstruit pour ladite grandeur physique,

c) une élaboration (144) d'une première erreur (ERR1) entre le niveau de grandeur physique considérée et ledit premier niveau reconstruit,

d) un décodage décompressif (143, 173) du deuxième mot numérique compressé,

e) une reconstruction (145, 175) du niveau de ladite grandeur physique à partir du deuxième mot numérique complémentaire décodé de façon à obtenir un deuxième niveau reconstruit pour ladite grandeur physique,

f) une élaboration (147) d'une deuxième erreur (ERR2) entre le niveau de grandeur physique considérée et ledit deuxième niveau reconstruit,

g) une sélection (149, 179) de celui du premier ou du deuxième mot numérique complémentaire compressé qui donne l'erreur la plus faible parmi la première erreur et la deuxième erreur, et

pour chaque échantillon (PRi) suivant,

h) une répétition des étapes a) à f), une élaboration d'une première erreur cumulée (ERR1C) égale à la somme de ladite première erreur (ERR1) et de toutes les erreurs les plus faibles (ERRFk) associées aux échantillons précédents, une élaboration d'une deuxième erreur cumulée (ERR2C) égale à la somme de ladite deuxième erreur (ERR2) et de toutes les erreurs les plus faibles (ERRFk) associées aux échantillons précédents, une sélection (149, 179) de celui du premier ou du deuxième mot numérique complémentaire compressé qui donne l'erreur la plus faible parmi la première erreur cumulée et la deuxième erreur cumulée, et

si le paramètre de gradient est inférieur ou égal audit deuxième seuil (TH1), il est alors considéré comme nul, et le signal numérique local encodé contient alors uniquement le groupe de premiers bits (STRC) et le bit de comparaison (ZMAP), tandis que si le paramètre de gradient est supérieur audit deuxième seuil, le signal numérique local encodé contient alors le groupe de premiers bits (STRC), le mot numérique complémentaire compressé sélectionné (GPANCS, GPACS), le bit de polarité (POL) et le bit de comparaison (ZMAP).

15. Procédé selon l'une des revendications 3 à 5, dans lequel on classe chaque échantillon de la séquence dans une classe appartenant à un ensemble de classes (CLi) et on ajuste au moins la valeur du premier seuil (DTH) en fonction de la classe.

16. Procédé selon la revendication 15, dans lequel ledit ensemble de classes comprend une première classe (CL1) associée aux échantillons appartenant à une zone dans laquelle les gradients de ladite au moins une grandeur physique sont homogènes, une deuxième classe (CL2) associée aux échantillons dont les gradients de ladite au moins une grandeur physique sont des extrema locaux, et une troisième classe (CL3) associée aux échantillons appartenant à au moins un contour de l'espace multidimensionnel.

17. Procédé selon l'une des revendications précédentes, dans lequel le signal numérique initial est un signal vidéo (SIM), chaque échantillon étant un pixel et chaque grandeur physique est une composante couleur $(Y, C_b, C_r)$ du pixel.

18. Procédé de décodage d'un signal numérique en un signal décodé, le signal numérique ayant été encodé par le procédé selon l'une des revendications précédentes, comprenant pour chaque échantillon courant et pour chaque grandeur physique, une élaboration (201) du niveau de la grandeur physique considérée à partir du signal numérique local encodé associé à cet échantillon courant, de façon à délivrer un signal local décodé (SIDL), le signal décodé comportant lesdits signaux locaux décodés (SID).

19. Dispositif d'encodage d'un signal numérique initial en un signal encodé, le signal numérique initial comportant une séquence d'échantillons représentant un espace multidimensionnel, chaque échantillon étant affecté d'au moins une grandeur physique, comprenant des moyens de traitement (MT1) configurés pour effectuer, pour certains au moins des échantillons courants, des encodages localisés du signal en des signaux numériques locaux encodés, le signal encodé (SIC) comportant lesdits signaux numériques locaux encodés (SICL), une analyse à la volée d'une caractéristique associée au signal encodé, et un ajustement direct ou indirect au niveau échantillon, d'au moins un paramètre d'encodage intervenant dans lesdits encodages localisés de façon à stabiliser la valeur de ladite caractéristique sur une valeur cible à une tolérance près.

**20.** Dispositif selon la revendication 19, dans lequel les moyens de traitement (MT1) sont configurés pour effectuer ladite analyse à la volée comprenant une détermination de la valeur de ladite caractéristique sur un bloc courant d'échantillons de ladite séquence et pour effectuer ledit ajustement pour chaque échantillon du bloc suivant d'échantillons.

**21.** Dispositif selon l'une des revendications 19 ou 20, dans lequel les moyens de traitement (MT1) sont configurés pour appliquer un masque à ladite séquence d'échantillons, et pour effectuer ledit ajustement d'un premier paramètre d'encodage comprenant pour chaque échantillon courant, une comparaison de la valeur du masque associée à cet échantillon avec un premier seuil (DTH) dont la valeur est ajustée en fonction de la valeur de ladite caractéristique par rapport à ladite valeur cible, le résultat de la comparaison conditionnant la valeur dudit premier paramètre d'encodage.

**22.** Dispositif selon la revendication 21, dans lequel le masque est du type bruit bleu ou une matrice statique (MSK) comportant plusieurs valeurs prises parmi un jeu de valeurs de référence.

**23.** Dispositif selon la revendication 21 ou 22, dans lequel ladite caractéristique est le taux de compression du signal encodé, et la valeur dudit premier paramètre d'encodage (ZMAP) définit la taille du signal numérique local encodé.

**24.** Dispositif selon l'une des revendications 21 à 23, dans lequel le premier paramètre d'encodage est un bit de référence (ZMAP), et les moyens de traitement sont configurés pour forcer le bit de référence à une première valeur logique lorsque la valeur du masque associée à l'échantillon courant est inférieure ou égale au premier seuil (DTH).

**25.** Dispositif selon l'une des revendications 19 à 24, dans lequel les moyens de traitement sont configurés pour effectuer les encodages localisés dans des repères locaux (RLC) incluant chacun l'échantillon courant considéré et deux échantillons de référence choisis, sur la base d'un gradient minimal de ladite au moins une grandeur physique, parmi les échantillons disponibles de ladite séquence, et pour effectuer pour chaque grandeur physique affectée à l'échantillon courant considéré, un paramétrage numérique dudit repère local (RLC) et du niveau (APR) de la grandeur physique considérée dans ledit repère local de façon à obtenir le signal encodé local associé à l'échantillon courant (PR) et à la grandeur physique considérée.

**26.** Dispositif selon la revendication 25, dans lequel les moyens de traitement sont configurés pour effectuer, pour le paramétrage du repère local, une élaboration d'un groupe de premiers bits (STRC) dont les valeurs définissent la structure du repère local parmi un ensemble de structures possibles.

**27.** Dispositif selon les revendications 24, 25 et 26, dans lequel lorsque le bit de référence est forcé à sa première valeur logique, le signal numérique local encodé contient alors uniquement le groupe de premiers bits (STRC) et le bit de référence (ZMAP).

**28.** Dispositif selon la revendication 25 ou 26, dans lequel les moyens de traitement sont configurés pour effectuer, pour le paramétrage du niveau de la grandeur physique considérée dans le repère local, une élaboration d'un paramètre de gradient (GPA, GPAN) faisant intervenir au moins la valeur absolue du gradient (GPA), dit premier gradient, de ladite grandeur physique entre l'échantillon courant et un premier échantillon de référence, une comparaison de ce paramètre de gradient à un deuxième seuil (TH1), et une élaboration d'un bit de comparaison (ZMAP) représentatif du résultat de ladite comparaison, et dans lequel ledit deuxième seuil (TH1) est un deuxième paramètre d'encodage.

**29.** Dispositif selon la revendication 25, 26 ou 28, dans lequel les moyens de traitement (MT1) sont configurés pour effectuer, pour le paramétrage du niveau de la grandeur physique considérée dans le repère local, une détermination d'un bit de polarité (POL) dont la valeur indique au moins le positionnement du niveau de la grandeur physique considérée affectée à l'échantillon courant par rapport au niveau (APA) de ladite grandeur physique affectée au premier échantillon de référence.

**30.** Dispositif selon les revendications 26, 28 et 29, dans lequel si ledit paramètre de gradient est inférieur ou égal audit deuxième seuil, le signal numérique local encodé contient alors uniquement le groupe de premiers bits (STRC) et le bit de comparaison (ZMAP), et si le paramètre de gradient est supérieur audit deuxième seuil, le signal numérique local encodé contient alors le groupe de premiers bits (STRC), éventuellement le paramètre de gradient compressé (GPANC, GPAC), le bit de polarité (POL) et le bit de comparaison (ZMAP).

**31.** Dispositif selon les revendications 24 et 30, dans lequel le bit de comparaison est le bit de référence, et si la valeur du masque associée à l'échantillon courant est supérieure au premier seuil (DTH), la valeur du bit de comparaison dépend du résultat de ladite comparaison entre le paramètre de gradient (GPAN) et le deuxième seuil (TH1).

**32.** Dispositif selon la revendication 28, dans lequel les moyens de traitement sont configurés pour effectuer, pour le paramétrage du niveau de la grandeur physique considérée dans le repère local, un encodage compressif sur un groupe de deuxièmes bits dudit paramètre de gradient de façon à obtenir un paramètre de gradient compressé (GPANC, GPAC) et pour effectuer pour le paramétrage du niveau de la grandeur physique considérée dans le repère local, pour le premier échantillon (PR1) de la séquence,

a) une élaboration (140, 170) à partir du paramètre de gradient compressé d'un premier mot numérique complémentaire compressé et d'un deuxième mot numérique complémentaire compressé encadrant le paramètre compressé,
b) un décodage décompressif (141, 171) du premier mot numérique complémentaire compressé, une reconstruction (142, 172) du niveau de ladite grandeur physique à partir du premier mot numérique complémentaire décodé de façon à obtenir un premier niveau reconstruit pour ladite grandeur physique,
c) une élaboration (144) d'une première erreur (ERR1) entre le niveau de grandeur physique considérée et ledit premier niveau reconstruit,
d) un décodage décompressif (143, 173) du deuxième mot numérique compressé,
e) une reconstruction (145, 175) du niveau de ladite grandeur physique à partir du deuxième mot numérique complémentaire décodé de façon à obtenir un deuxième niveau reconstruit pour ladite grandeur physique,
f) une élaboration (147) d'une deuxième erreur (ERR2) entre le niveau de grandeur physique considérée et ledit deuxième niveau reconstruit,
g) une sélection (149, 179) de celui du premier ou du deuxième mot numérique complémentaire compressé qui donne l'erreur la plus faible parmi la première erreur et la deuxième erreur, et
pour chaque échantillon (PRi) suivant,
h) une répétition des étapes a) à f), une élaboration d'une première erreur cumulée égale à la somme de ladite première erreur et de toutes les erreurs les plus faibles associées aux échantillons précédents, une élaboration d'une deuxième erreur cumulée égale à la somme de ladite deuxième erreur et de toutes les erreurs les plus faibles associées aux échantillons précédents, une sélection (149, 179) de celui du premier ou du deuxième mot numérique complémentaire compressé qui donne l'erreur la plus faible parmi la première erreur cumulée et la deuxième erreur cumulée, et

si le paramètre de gradient est inférieur ou égal audit deuxième seuil (TH1), il est alors considéré comme nul, et le signal numérique local encodé contient alors uniquement le groupe de premiers bits (STRC) et le bit de comparaison (ZMAP), tandis que si le paramètre de gradient est supérieur audit deuxième seuil, le signal numérique local encodé contient alors le groupe de premiers bits (STRC), le mot numérique complémentaire compressé sélectionné (GPANCS, GPACS), le bit de polarité (POL) et le bit de comparaison (ZMAP).

**33.** Dispositif selon l'une des revendications 21 à 26, dans lequel chaque échantillon de la séquence est classé dans une classe appartenant à un ensemble de classes et les moyens de traitement sont configurés pour ajuster au moins la valeur du premier seuil en fonction de la classe.

**34.** Dispositif selon la revendication 33, dans lequel ledit ensemble de classes comprend une première classe (CL1) associée aux échantillons appartenant à une zone dans laquelle les gradients de ladite au moins une grandeur physique sont homogènes, une deuxième classe (CL2) associée aux échantillons dont les gradients de ladite au moins une grandeur physique sont des extrema locaux, et une troisième classe (CL3) associée aux échantillons appartenant à au moins un contour de l'espace multidimensionnel.

**35.** Dispositif selon l'une des revendications 19 à 34, dans lequel le signal numérique initial est un signal vidéo (SIM), chaque échantillon étant un pixel et chaque grandeur physique est une composante couleur ($Y$, $C_b$, $C_r$) du pixel.

**36.** Dispositif de décodage d'un signal numérique encodé par le dispositif d'encodage selon l'une des revendications 19 à 35, configuré pour délivrer un signal décodé, comprenant des moyens de traitement (MT2) configurés pour, pour chaque échantillon courant, effectuer une élaboration du niveau de la grandeur physique considérée à partir du signal numérique local encodé associé à cet échantillon courant, de façon à délivrer un signal local décodé, le signal décodé comportant lesdits signaux locaux décodés.

**37.** Produit programme d'ordinateur chargeable directement dans une mémoire d'un système informatique, comprenant des portions de code de logiciel pour l'exécution du procédé d'encodage selon l'une des revendications 1 à 17 ou du procédé de décodage selon la revendication 18, lorsque ledit programme est exécuté sur ledit système informatique.

**38.** Support lisible par un système informatique, ayant des instructions exécutables par ordinateur adaptées pour provoquer l'exécution par le système informatique du procédé d'encodage selon l'une des revendications 1 à 17 ou du procédé de décodage selon la revendication 18.

FIG.1

## FIG.2

EP 3 349 446 A1

## FIG.3

SIM

2

gradient minimal
grandeur physique

échantillon courant
grandeur physique — PRi

RLC — repère local

encodage localisé — 20

signal local
encodé — SICL

## FIG.4

échantillon courant
PR : $(x_i, y_i)$
grandeur physique
niveau : APR

NA échantillons
voisins de l'échantillon
courant

détermination
$GP_k = APR - AP_k$
$k = 1, .... NA$ — 30

détermination
min $|GP_k|$ — 31

détermination
min (min $|GP_k|$)
pour toutes les
grandeurs physiques — 32

RLC

33 — détermination A

détermination repère
local

A

PR

34 — détermination B

B

# FIG.5

| $(x_{i-1}, y_{j+1})$ | $(x_i, y_{j+1})$ | $(x_{i+1}, y_{j+1})$ |
|---|---|---|
| $(x_{i-1}, y_j)$ | $(x_i, y_j)$ | $(x_{i+1}, y_j)$ |
| $(x_{i-1}, y_{j-1})$ | $(x_i, y_{j-1})$ | $(x_{i+1}, y_{j-1})$ |

ECH2 — 

PR

ECH3 — 

— ECH5

ECH4

# FIG.6

ECH2 —

A    PR

B

RLC    ECH4

## FIG.7

## FIG.8

# FIG.9

# FIG.10

| position A | STRC |
|---|---|
| ECH 2 | 0 0 |
| ECH 3 | 0 1 |
| ECH 4 | 1 0 |
| ECH 5 | 1 1 |

## FIG.11

RLC          RLC

RLC

RLC

## FIG.12

| | | | |
|------|------|------|------|
| ECH2 | PR | | |
| ECH3 | ECH4 | ECH5 | ECH6 |

## FIG.13

| | | | | |
|------|------|------|------|------|
| ECH1 | ECH2 | PR | | |
| ECH0 | ECH3 | ECH4 | ECH5 | ECH6 |

# FIG.14

```
        échantillon courant
                PR
        grandeur physique
          niveau : APR
```

110

APA ≤ APR ≤ APB
ou
APB ≤ APR ≤ APA

oui → POL = 0

non → POL = 1

111

détermination

$$GPAN = \frac{GPA'}{GPA' + GPB'}$$

détermination
GPA' = |APR - APA|
GPB' = |APR - APB|   ~112

encodage compressif
GPAN
→ GPANC   ~113

# FIG.15

APR + GPB

GPB

APR

POL = 1

GPA

APA

APB

# FIG.16

MSK

MTF

V1  V3

| 1 | 3 | 1 | 3 | 1 | 3 | 1 | 3 | 1 |
|---|---|---|---|---|---|---|---|---|
| 4 | 2 | 4 | 2 | 4 | 2 | 4 | 2 | 4 |
| 1 | 3 | 1 | 3 | 1 | 3 | 1 | 3 | 1 |
| 4 | 2 | 4 | 2 | 4 | 2 | 4 | 2 | 4 |

V4

V2

| $(x_{i-1},y_{j+1})$ | $(x_i,y_{j+1})$ | $(x_{i+1},y_{j+1})$ |
|---|---|---|
| $(x_{i-1},y_j)$ | $(x_i,y_j)$ | $(x_{i+1},y_j)$ |
| $(x_{i-1},y_{j-1})$ | $(x_i,y_{j-1})$ | $(x_{i+1},y_{j-1})$ |

PR

## FIG.17

PR
Coordonnées $(x_i, y_j)$

Vi

1700

oui   $Vi \leq DTH$ ?   non

1701 — ZMAP = 0

GPAN → Comparaison ← TH1

130

BSTR = ZMAP | GPANC | POL | STRC

SICL

## FIG.18

GPAN

130

oui   $GPAN \leq TH1$ ?   non

131 — GPAN = 0
ZMAP = 1

ZMAP = 0 — 132

BSTR = ZMAP | STRC

BSTR = ZMAP | GPANC | POL | STRC

SICL

SICL

# FIG.19

# FIG.20

```
            ┌──────────┐
            │   PR1    │
            └──────────┘
                 │
        ┌────────┼───────────────────────────────────┐  14
        │   ┌──────────┐                              │
        │   │  GPAN    │                              │
        │   └──────────┘                              │
        │        │                                    │
        │  ┌─────────────────────────────┐            │
        │  │ GPANC1 ≤ GPANC ≤ GPANC2     │─ 140       │
        │  └─────────────────────────────┘            │
        │      │                    │                 │
        │  ┌──────────┐        ┌──────────┐           │
        │  │ décodage │        │ décodage │           │
   141 ─│  │décompressif       │décompressif│─ 143     │
        │  │ GPANC1   │        │ GPANC2   │           │
        │  └──────────┘        └──────────┘           │
        │      │                    │                 │
        │  ┌──────────┐        ┌──────────┐           │
        │  │ GPAND1   │        │ GPAND2   │           │
        │  └──────────┘        └──────────┘           │
        │      │                    │                 │
        │  ┌──────────────┐    ┌──────────────┐       │
        │  │ reconstruction│    │ reconstruction│      │
   142 ─│  │ APRE 1 =     │    │ APRE 2 =     │─ 145   │
        │  │GPAND1(APB-APA)+APA│ │GPAND2(APB-APA)+APA│ │
        │  └──────────────┘    └──────────────┘       │
        │      │                    │                 │
   144 ─│ ┌──────────────┐     ┌──────────────┐─ 147  │
        │ │ERR1=|APR-APRE1|│    │ERR2=|APR-APRE2||     │
        │ └──────────────┘     └──────────────┘       │
        └──────┼────────────────────┼─────────────────┘
               │   ┌──────────────┐ │
               │   │ détermination│ │     ┌──────────┐
               └──▶│ erreur la    │◀┘     │ Stockage │─ 1480
          148 ─────│plus faible ERRF│─────▶│  ERRF   │
                   └──────────────┘       └──────────┘
                          │
                   ┌──────────────────────────┐
                   │ sélection                │─ 149
                   │ GPANCS = GPANC1 ou GPANC2 │
                   └──────────────────────────┘
```

# FIG.21

PR$_i$

14

2100 — ERR1C = ERR1+$\sum\limits_{k=1}^{i-1}$ERRF$_k$

2101 — ERR2C = ERR2+$\sum\limits_{k=1}^{i-1}$ERRF$_k$

2402 — détermination erreur cumulée la plus faible

Stockage ERRF$_i$ — 2103

sélection GPANCS = GPANC1 ou GPANC2 — 2104

## FIG.22

GPAN

150

GPAN ≤ TH1 ?

oui

non

151 — GPAN = 0
ZMAP = 1

ZMAP = 0 — 152

BSTR = ZMAP | STRC

BSTR = ZMAP | GPANCS | POL | STRC

SICL

SICL

## FIG.23

PR
Coordonnées $(x_i, y_j)$

Vi

2300

Vi ≤ DTH2 ?

oui

non

1701 — ZMAP = 0

Comparaison

130

# FIG.24

```
┌─────────────────────┐
│   réception BSTR     │⌐ 200              3
└─────────────────────┘                    ↙
           │
           ↓
┌─────────────────────┐
│   élaboration APR    │
│  pour grandeur physique │⌐ 201
└─────────────────────┘
           │
           ↓
      ╭─────────╮
      │  SIDL   │
      ╰─────────╯
           │
           ↓
      ╭─────────╮
      │   SID   │
      ╰─────────╯
```

# FIG.25

```
           210                          2
            ╲                            ╲
      ┌──────────────┐  SIM      ┌──────────────┐
SB ──→│ pré-accentuation │────→  │  compression  │──→ SIC
      └──────────────┘           └──────────────┘


            3                          211
            ╲                            ╲
      ┌──────────────┐  SIM      ┌──────────────┐
SIC ─→│ décompression │────→     │ désaccentuation │──→ SB
      └──────────────┘           └──────────────┘
```

# FIG.26

| (A) | (B) | (A) | (B) | (A) | (B) | (A) | (B) | (A) |
| (B) | (C) | (B) | (C) | (B) | (C) | (B) | (C) | (B) |
| (A) | (B) | (A) | (B) | (A) | (B) | (A) | (B) | (A) |
| (B) | (C) | (B) | (C) | (B) | (C) | (B) | (C) | (B) |

# FIG.27

(A) → [ 2 ] → SICA

(B) → [ 2 ] → SICB

(C) → [ 2 ] → SICC

Europäisches
Patentamt

European
Patent Office

Office européen
des brevets

**RAPPORT DE RECHERCHE EUROPEENNE**

Numéro de la demande

EP 17 18 6782

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 7 751 633 B1 (MUKHERJEE DEBARGHA [US]) 6 juillet 2010 (2010-07-06) | 1,2, 17-20, 35-38 | INV. H04N19/103 H04N19/15 |
| A | * abrégé; figures 1, 4, 6 * <br> * colonne 3, ligne 18 - ligne 43 * <br> * colonne 6, ligne 63 - colonne 7, ligne 61 * <br> * colonne 17, ligne 39 - ligne 49 * <br> ----- | 3-16, 21-34 | H04N19/182 H04N19/176 <br><br> ADD. H04N19/593 |
| X | FRITZ LEBOWSKY ET AL: "How suitable is structure tensor analysis for real-time color image compression in context of high quality display devices", ELECTRONIC IMAGING, vol. 2016, no. 20, 14 février 2016 (2016-02-14), pages 1-8, XP055415762, ISSN: 2470-1173, DOI: 10.2352/ISSN.2470-1173.2016.20.COLOR-351 * abrégé * <br> * page 351.3 - page 351.6 * <br> ----- | 1-38 | |
| A,D | BACCA RODRIGUEZ J ET AL: "Blue-Noise Multitone Dithering", IEEE TRANSACTIONS ON IMAGE PROCESSING, IEEE SERVICE CENTER, PISCATAWAY, NJ, US, vol. 17, no. 8, 1 août 2008 (2008-08-01), pages 1368-1382, XP011247527, ISSN: 1057-7149 * le document en entier * <br> ----- | 4,22 | **DOMAINES TECHNIQUES RECHERCHES (IPC)** <br><br> H04N |
| A,D,P | EP 3 203 737 A1 (STMICROELECTRONICS SAS [FR]) 9 août 2017 (2017-08-09) * le document en entier * <br> ----- | 1-38 | |

Le présent rapport a été établi pour toutes les revendications

| Lieu de la recherche | Date d'achèvement de la recherche | Examinateur |
|---|---|---|
| La Haye | 17 octobre 2017 | Streich, Sebastian |

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 17 18 6782

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

17-10-2017

| Document brevet cité au rapport de recherche | | Date de publication | Membre(s) de la famille de brevet(s) | | Date de publication |
|---|---|---|---|---|---|
| US 7751633 | B1 | 06-07-2010 | AUCUN | | |
| EP 3203737 | A1 | 09-08-2017 | CN | 107027035 A | 08-08-2017 |
| | | | EP | 3203737 A1 | 09-08-2017 |
| | | | FR | 3047381 A1 | 04-08-2017 |
| | | | US | 2017223358 A1 | 03-08-2017 |

EPO FORM P0460

Pour tout renseignement concernant cette annexe : voir Journal Officiel de l'Office européen des brevets, No.12/82

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **J. BACCA RODRIGUEZ.** Blue-noise Multitone Dithering. *IEEE Transactions on Image Processing,* Août 2008, vol. 17 (8